# FASCICULE DE BREVET EUROPEEN

(11) **EP 3 166 397 B1**
(45) Date de publication et mention de la délivrance du brevet: **07.10.2020**
(21) Numéro de dépôt: 15736275.7
(22) Date de dépôt: 10.07.2015
(51) Int. Cl.: A01K 1/01, B01J 20/10, C01F 11/02, C04B 28/18, C04B 2/10, C04B 20/10, C01B 33/24, A01K 1/015

(54) **CHAUX VIVE A REACTIVITE RALENTIE, SON PROCEDE DE FABRICATION ET SON UTILISATION**
ÄTZKALK MIT VERZÖGERTER REAKTIVITÄT, VERFAHREN ZUR HERSTELLUNG DAVON UND VERWENDUNG DAVON
DELAYED REACTIVITY QUICKLIME, PROCESS FOR MANUFACTURING SAME AND USE THEREOF

(30) Priorité: 10.07.2014 BE 201400529; 10.07.2014 FR 1456679
(43) Date de publication de la demande: 17.05.2017
(73) Titulaire: S.A. Lhoist Recherche et Développement, 1342 Ottignies-Louvain-la-Neuve (BE)
(72) Inventeur: BLANDIN, Gaetan, F-49360 Maulevrier (FR); EMMERICH, Jens, 1420 Braine-l'Alleud (BE); CRINIERE, Guillaume, B-1420 Braine-l'Alleud (BE); LUCION, Thierry, B-1932 Sint-Stevens Woluwe (BE)
(74) Mandataire: Gevers Patents
(86) Numéro de dépôt international: PCT/EP2015/065832
(87) Numéro de publication internationale: WO 2016/005558

(56) Documents cités:
- EP-A1- 0 013 935
- EP-A1- 0 085 939
- WO-A1-98/02391
- DE-A1- 3 925 474
- GB-A- 593 648
- GB-A- 1 585 483
- E. SERRIS ET AL: "Study of the hydration of CaO powder by gas-solid reaction", CEMENT AND CONCRETE RESEARCH, vol. 41, no. 10, octobre 2011 (2011-10), pages 1078-1084, XP055168449, ISSN: 0008-8846, DOI: 10.1016/j.cemconres.2011.06.014

## Description

La présente invention se rapporte à une chaux vive à réactivité ralentie présentant une réactivité à l'eau t₆₀ selon le test de réactivité EN 459-2 : 2010 E supérieure ou égale à 5 minutes.

Au sens de la présente invention, on entend par chaux vive, une matière solide minérale, dont la composition chimique est principalement de l'oxyde de calcium, CaO. La chaux vive est communément obtenue par calcination de calcaire, principalement constitué de carbonate de calcium, CaCO₃. Cette chaux vive peut également contenir, à hauteur de quelques pourcents, des impuretés telles que des phases dérivées de MgO, SiO₂, Al₂O₃, Fe₂O₃, MnO, P₂O₅, K₂O et/ou SO₃, amenées par le calcaire initial et/ou par le combustible de calcination. Il est entendu que ces impuretés sont exprimées sous les formes précitées mais peuvent en réalité apparaître sous des phases différentes.

La chaux vive est utilisée dans un grand nombre d'applications telles que par exemple la sidérurgie, l'extraction des métaux non ferreux, la construction et le génie civil, le traitement des fumées, le traitement des eaux et des boues, l'agriculture ou bien encore l'industrie chimique de manière générale.

La chaux vive est industriellement produite par cuisson des calcaires naturels dans différents types de fours tels que des fours droits (fours régénératifs à double flux, fours annulaires, fours droits standard...) ou bien encore des fours rotatifs.

La qualité de la chaux vive, notamment sa réactivité à l'eau, et la constance de cette qualité sont en partie liées au type de four utilisé, aux conditions d'utilisation du four, à la nature du calcaire dont est issue la chaux vive elle-même, ou bien encore à la nature et à la quantité du combustible utilisé.

Ainsi, il est théoriquement possible, en contrôlant les conditions de calcination, de produire toute une gamme de chaux vives avec des réactivités à l'eau allant des plus explosives aux plus lentes. En général, l'obtention d'une chaux vive plutôt réactive passe par une cuisson douce (900-1000°C) alors que l'obtention d'une chaux vive peu réactive passe par une surcuisson à plus haute température (1200-1400°C). Les chaux vives issues d'une cuisson douce sont plus connues sous le nom de « soft-burnt quicklimes » et présentent un t₆₀ typiquement inférieur à 5 minutes tandis que les chaux vives issues d'une surcuisson sont plus connues sous le nom de « mid-/hard-burnt quicklimes » et présentent un t₆₀ typiquement supérieur ou égal à 5 minutes.

Les chaux vives obtenues par cuisson douce présentent en général des surfaces spécifiques supérieures à 0,8 m²/g, en particulier supérieures à 1 m²/g, alors que les chaux vives surcuites présentent en général des surfaces bien inférieures à 1 m²/g, en particulier inférieures à 0,8 m²/g.

Par « cuisson douce » ou « surcuisson», on entend au sens de la présente invention des cuissons réalisées par simple passe.

Dans le cadre de la présente demande, la réactivité à l'eau de la chaux vive est mesurée en utilisant le test de réactivité à l'eau de la norme européenne EN 459-2 : 2010 E. Ainsi, 150 g de chaux vive sont ajoutés sous agitation dans un Dewar cylindrique de 1,7 dm³ de capacité contenant 600 cm³ d'eau permutée à 20°C. L'agitation à 250 tours par minute est réalisée au moyen d'une pale spécifique (agitateur à lame tel que décrit dans ladite norme). L'évolution de la température est mesurée en fonction du temps, ce qui permet de tracer une courbe de réactivité. De cette courbe, on peut notamment déduire les valeurs T₂, T₅, T₁₀, Tₘ - qui sont respectivement les températures atteintes après 2 min, 5 min, 10 min et la température maximum - ou encore la valeur t₆₀ qui représente le temps nécessaire pour atteindre 60°C. Par souci de simplification, la température maximale observée, nommée T'max dans la norme EN 459-2 : 2010 E, sera appelée Tₘ dans la présente demande. Dans le cadre de cette invention, la réactivité est toujours mesurée sur une chaux vive moulue dont la taille des particules est donc majoritairement comprise entre 0 et 90 µm.

Dans le cadre de la présente demande, les surfaces spécifiques sont mesurées par manométrie d'adsorption d'azote après dégazage sous vide à 190°C pendant au moins 2 heures et calculées selon la méthode BET multi-points telle que décrite dans la norme ISO 9277 : 2010 E.

Les caractéristiques et les propriétés de la chaux vive sont globalement adaptées au cas par cas pour satisfaire aux exigences de chacune de ses applications. Une des propriétés typiques de la chaux vive est sa réaction fortement exothermique avec l'eau qui peut être mise à profit dans certains procédés de fabrication.

C'est par exemple le cas pour la fabrication du béton cellulaire. Celui-ci est obtenu au départ d'un mélange de matières premières riches en silice (sables broyés ou cendres volantes), de ciment, d'une source de sulfate telle que le gypse ou l'anhydrite, d'une chaux vive, d'une poudre à lever comme par exemple l'aluminium sous forme métallique et d'eau.

Dans un premier temps, la chaux vive réagit avec l'eau pour former de la chaux hydratée, ce qui génère une certaine quantité de chaleur. La chaleur dégagée conduit à une augmentation de la température qui favorise la formation d'hydrogène gazeux par réaction de l'eau au contact de l'aluminium métallique, ce qui conduit ainsi à une expansion du mélange et l'obtention d'un milieu poreux communément appelé « gâteau ».

Parallèlement, la chaux hydratée réagit avec les autres constituants ce qui conduit à la formation de silicates de calcium hydratés (CSH) et donc à la consolidation de la structure poreuse du gâteau.

La vitesse de la réaction d'hydratation entre la chaux vive et l'eau est déterminante car elle va en partie conditionner la réussite du procédé de fabrication du béton cellulaire. Il ne faut pas qu'elle soit trop rapide au risque de conduire à un dégagement de chaleur trop violent entrainant une montée en température du gâteau elle-même trop rapide ce qui conduit à une trop forte expansion du gâteau avant sa consolidation et donc à son effondrement. Il ne faut pas non plus qu'elle soit trop lente au risque d'avoir une consolidation trop précoce avant que l'expansion ne soit terminée (apparition de craquelures lors de l'expansion).

Lorsque le gâteau est bien consolidé, il est découpé sous la forme de briques et le béton cellulaire est obtenu à l'issue d'un traitement hydrothermal en autoclave qui lui confère ses propriétés mécaniques finales.

Actuellement, les chaux vives les plus couramment utilisées dans la fabrication du béton cellulaire sont plus communément appelées « chaux vives à réactivité ralentie ». Elles possèdent une cinétique d'hydratation dans l'eau et donc un profil de dégagement de chaleur, plutôt bien adaptée au procédé de fabrication du béton cellulaire, c'est-à-dire une courbe de réactivité dans l'eau relativement linéaire et une valeur de t₆₀ relativement élevée, généralement comprise entre 5 et 12 minutes.

A titre d'exemple, une chaux vive à réactivité peu ralentie peut se caractériser par les encadrements suivants : 5<t₆₀<8min ; 36<T₂<51°C; 54<T₅<65°C ; 64<T₁₀<74°C; 71<T₂₀<78°C ; Tₘ> 69°C, et une chaux vive à réactivité davantage ralentie peut se caractériser par les encadrements suivants : 8< t₆₀<12min ; 26<T₂<35°C ; 34<T₅<46°C; 51<T₁₀<63°C; 66<T₂₀<75 ; Tₘ>69°C.

Par ailleurs, pour la production de bétons cellulaires, il est avantageux de conserver une valeur de Tₘ relativement élevée, car c'est cette valeur qui rend compte du potentiel exothermique de la chaux vive. Une valeur de Tₘ trop basse conduirait à devoir sur-doser la quantité de chaux vive mise en œuvre dans la fabrication du béton cellulaire. Cette valeur de Tₘ est principalement influencée par la quantité de calcium sous forme oxyde (CaO) disponible au sein de la chaux vive, qui elle-même dépend de la pureté chimique de la chaux vive et de son degré de cuisson.

Des chaux vives à réactivité ralentie préparées au départ de chaux vives à cuisson douce ont été développées notamment pour des applications dans les bétons cellulaires, comme par exemple la chaux vive à réactivité ralentie utilisée dans le document WO98/02391 (voir par exemple figure 3). Celui-ci revendique un procédé de production du béton cellulaire utilisant une chaux vive à cuisson douce, modifiée avec un agent chimique qui est d'origine organique ou minéral et/ou simplement de l'eau, et qui a principalement pour objectifs de limiter l'augmentation rapide de température dans les premières secondes du test de réactivité et ainsi de limiter l'agglomération de la chaux lors de sa mise en œuvre.

D'autres chaux vives à réactivité ralentie préparées au départ de chaux vives à cuisson douce ont également déjà été décrites dans la littérature. Leurs procédés de fabrication reposent principalement sur une modification partielle de la nature chimique de la chaux vive ou bien encore sur une modification de la chimie de surface de la chaux vive par un traitement de type minéral.

On peut par exemple citer le document GB 1 585 483 qui propose une modification d'une chaux vive à cuisson douce par un procédé qui consiste à hydrater partiellement la surface de la chaux vive par ajout d'eau à température ambiante puis à carbonater celle-ci par mise en contact avec du dioxyde de carbone gazeux.

Toutefois, bien que le traitement soit efficace pour ralentir la réactivité de la chaux un inconvénient majeur du procédé décrit est que la modification de la chaux vive conduit à une diminution importante de la valeur du Tₘ, ce qui signifie qu'une partie assez significative du produit n'est plus de la chaux vive mais vraisemblablement de la chaux hydratée. En plus de limiter le potentiel du produit dans l'application, notamment son aptitude à générer une réaction exothermique importante avec l'eau, cela souligne le manque d'homogénéité du traitement de surface de la chaux vive ce qui est préjudiciable lors de la mise en œuvre dans le procédé de fabrication du béton cellulaire.

En raison notamment de tous les inconvénients précités, mais aussi parce que les traitements ont toujours été réalisés de manière imparfaite et inhomogène, les chaux vives à réactivité ralentie préparées au départ de chaux vives à cuisson douce n'ont jusqu'à présent jamais pu être mises en œuvre dans les applications de type bétons cellulaires. Actuellement, la production de béton cellulaire doit donc recourir à l'utilisation des chaux surcuites qui présentent également un t₆₀ typiquement supérieur à 5 minutes.

Plus précisément, le type de chaux vive généralement utilisée dans le procédé de fabrication du béton cellulaire est une chaux vive surcuite à réactivité ralentie, c'est-à-dire que non seulement c'est une chaux vive de type surcuite, mais surcuite de telle sorte que la courbe de réactivité de ladite chaux vive dans l'eau soit relativement linéaire.

Malheureusement, les chaux vives surcuites en général et les chaux vives surcuites à réactivité ralentie en particulier sont plus difficiles et plus chères à produire que les chaux vives à cuisson plus douce car elles nécessitent d'utiliser des fours droits spécifiques (tels que des fours de type « Normal Shaft Kilns » par exemple), des températures plus élevées mais aussi parce que, sauf à utiliser des fours dédiés, la production de ces chaux vives surcuites à réactivité ralentie conduit à des inter-campagnes de production ce qui n'est pas sans poser des problèmes de stabilisation des conditions de calcination et donc des problèmes de stabilisation de la qualité.

De plus, la surcuisson conduit bien souvent à produire une chaux vive de qualité moins stable en termes de réactivité à l'eau car l'opération de calcination est réalisée dans une zone de température élevée où une faible variation de la température de calcination conduit généralement à une grande variation de la texture de la chaux vive produite (notamment une grande variation de la taille des grains et donc de la surface spécifique, du volume poreux et de la densité) et par conséquent à une grande variation de la valeur du t₆₀.

Compte tenu des contraintes et des difficultés à produire ce type de chaux vive à réactivité ralentie par les procédés de surcuisson usuels, et compte tenu aussi des surconsommations énergétiques occasionnées et donc de l'empreinte environnementale négative en terme de génération de CO₂, on comprend aisément qu'il existe un besoin pour développer un nouveau type de chaux vive à réactivité ralentie ne présentant pas les désavantages des chaux obtenues par surcuisson.

L'invention a pour but de pallier les inconvénients de l'état de la technique en procurant une chaux vive à réactivité ralentie dont les caractéristiques sont stables et contrôlées, permettant notamment une utilisation optimale dans les applications de type bétons cellulaires.

Pour résoudre ce problème, il est prévu suivant l'invention une chaux vive à réactivité ralentie telle que mentionnée au début, c'est-à-dire présentant une réactivité à l'eau t₆₀ selon le test de réactivité EN 459-2 : 2010 E supérieure ou égale à 5 minutes, caractérisée en ce que ladite chaux vive à réactivité ralentie présente une réactivité à l'eau t₆₀ inférieure ou égale à 18 minutes et est une chaux vive à cuisson douce, et en ce que la chaux vive à réactivité ralentie selon la présente invention présente une réactivité à l'eau t₆₀rev après traitement thermique à 700°C dans un four à moufle pendant 30 minutes de 200 g de ladite chaux vive à réactivité ralentie inférieure ou égale à 1/3 de son t₆₀ mesuré selon le test de réactivité EN 459-2 : 2010 E et en ce que ladite chaux vive à réactivité ralentie présente un Tₘ mesuré selon la norme EN 459-2 : 2010 E supérieur ou égal à Tₘrev - 5°C où Tₘrev représente la valeur de Tₘ de la chaux vive à réactivité ralentie après ledit traitement thermique de ladite chaux vive à réactivité ralentie.

Comme on peut le constater, la chaux vive à réactivité ralentie selon la présente invention présente une réactivité à l'eau t₆₀ comprise entre 5 et 18 minutes, c'est-à-dire une réactivité à l'eau particulièrement adaptée aux applications de type bétons cellulaires, comme la réactivité à l'eau t₆₀ susceptible d'être obtenue pour des chaux vives surcuites, mais qui est bien mieux contrôlée.

En effet, la surcuisson présente de nombreux désavantages, outre la consommation énergétique et l'impact environnemental, comme par exemple de fournir des chaux vives surcuites qui sont de qualité moins stable en termes de réactivité à l'eau car l'opération de calcination est réalisée dans une zone de température élevée où une faible variation de la température de calcination peut conduire à une grande variation de la texture de la chaux vive produite. En conséquence, la chaux vive surcuite issue de la calcination n'est pas homogène en terme de qualité texturale et présente des particules plus ou moins cuites, dont certaines présenteront donc des réactivités à l'eau t₆₀ bien trop élevées et d'autres bien trop faibles.

La chaux vive à réactivité ralentie selon la présente invention étant obtenue à partir d'une chaux vive à cuisson douce, elle présente donc une réactivité à l'eau bien mieux contrôlée. Ceci signifie que lorsque la chaux vive à réactivité ralentie de la présente invention est mise en contact avec une phase aqueuse, la température de la phase aqueuse augmente de manière prévisible et sensiblement linéaire avec le temps.

De cette façon, l'augmentation de température de la phase aqueuse est contrôlée et se produit à une vitesse appropriée pour une utilisation dans les bétons cellulaires, où finalement, les caractéristiques/contraintes de réactivité à l'eau sont dictées par les compositions de bétons cellulaires et par les besoins des fabricants de bétons cellulaires.

Ces caractéristiques/contraintes sont liées au procédé de fabrication des bétons cellulaires utilisés et peuvent également varier en fonction de l'utilisateur final. Les procédés existants de fabrication et de formulation de bétons cellulaires sont optimisés pour des chaux qui ont été mises à disposition localement, lesquelles sont bien souvent des chaux surcuites, obtenues de manière bien spécifique et contrôlée et sont donc généralement produites dans des fours droits de type « Normal shaft kiln », à savoir, comme mentionné précédemment, des fours consommateurs d'énergie et polluants que les chaufourniers souhaitent utiliser de moins en moins.

En conséquence, selon la présente invention, de manière surprenante, des chaux vives à réactivité ralentie à base de chaux vive à cuisson douce ont été développées qui présentent un comportement de réactivité à l'eau similaire à celui des chaux vives à surcuisson.

Ces chaux vives à cuisson douce utilisées comme matière première afin d'obtenir la chaux vive à réactivité ralentie selon la présente invention présentent à l'origine des t₆₀ typiquement entre 1 et 5 minutes alors que les prérequis des utilisateurs finaux résident dans le fait d'utiliser des chaux vives surcuites plutôt avec un t₆₀ de 5 à 12 minutes. Selon la présente invention, des chaux vives à cuisson douce, à réactivité ralentie ont été obtenues.

Elles présentent un t₆₀ compris dans la plage allant de 5 minutes à 18 minutes. De cette façon, il a été possible selon la présente invention d'obtenir des chaux vives à cuisson douce présentant des réactivités à l'eau similaires à celles des chaux vives surcuites, mais qui sont donc moins couteuses à produire, plus adaptées aux fours modernes les plus couramment utilisés et qui rentrent dans les processus actuels de cuisson, permettant d'éviter les inter-campagnes de surcuisson au beau milieu de campagnes de cuissons douces plus conventionnelles, optimisées et recherchées pour diminuer l'empreinte environnementale.

Par ailleurs, les chaux vives à réactivité ralentie de la présente invention sont également capables de conserver tout leur potentiel de dégagement de chaleur au contact de l'eau et ne requièrent pas l'utilisation d'additifs organiques.

Ainsi, la chaux vive à réactivité ralentie selon la présente invention permet d'une part de fournir un ralentissement dans la réaction d'hydratation suffisant (t₆₀ supérieur ou égal à 5 minutes) pour créer la porosité optimale dans les applications de bétons cellulaires, sans induire de dégagement d'hydrogène trop important lors de la réaction avec l'aluminium et d'autre part pas trop important pour permettre une cohésion optimale et la formation au juste moment des silicates de calcium.

La chaux vive à réactivité ralentie selon l'invention présente aussi l'intérêt de minimiser la formation de larges agglomérats de chaux hydratée (grits) lors de sa mise en œuvre dans les procédés de fabrication des silicates de calcium hydratés en général, notamment la tobermorite, et plus particulièrement dans le procédé de fabrication du béton cellulaire. Cette caractéristique revêt une importance considérable car, dans le procédé de fabrication du béton cellulaire par exemple, la suspension mise en œuvre pour produire le "gâteau" contient une certaine quantité de sulfate de calcium tel que du gypse ou de l'anhydrite. Or, il est connu que, lors de l'extinction de la chaux vive, la présence des sulfates conduit en général à former de larges agglomérats de chaux hydratée. Ces derniers sont néfastes pour l'obtention d'un béton cellulaire de bonne qualité.

Pour caractériser la tendance qu'a une chaux vive à former de larges agglomérats en présence d'une eau d'extinction contenant des sulfates, on utilise le test de réactivité selon la norme EN 459-2 : 2010 E dans lequel l'eau est substituée par de l'eau saturée en sulfate de calcium (2,4 g de gypse dans 600 cm³ d'eau).

Lorsqu'on effectue ce test avec de la chaux vive à réactivité ralentie selon l'invention, la quantité de larges agglomérats formés durant l'extinction est faible. En effet, après tamisage du lait de chaux issu du test de réactivité réalisé en présence des sulfates, la quantité des agglomérats dont la taille est supérieure ou égale à 200 µm est inférieure ou égale à 10 % en poids, et de préférence inférieure ou égale à 5 % en poids, par rapport à la quantité de ladite chaux vive à réactivité ralentie mise en œuvre dans ce test.

On entend par « quantité d'agglomérats dont la taille est supérieure ou égale à 200 µm » la matière solide qui ne passe pas au travers d'un tamis de 200 µm et dont la quantité est déterminée après un séchage à 105 °C pendant une nuit.

De manière avantageuse, la chaux vive à réactivité ralentie selon la présente invention présente un Tₘ mesuré selon la norme EN 459-2 : 2010 E supérieur ou égal à Tₘrev - 3°C où Tₘrev représente la valeur de Tₘ de la chaux vive à réactivité ralentie après traitement thermique à 700°C dans un four à moufle pendant 30 minutes de 200 g de ladite chaux vive à réactivité ralentie.

De préférence encore, la chaux vive à réactivité ralentie selon l'invention présente un Tₘ mesuré selon la norme EN 459-2 : 2010 E supérieur ou égal à Tₘrev - 2°C où Tₘrev représente la valeur de Tₘ de la chaux vive à réactivité ralentie après traitement thermique à 700°C dans un four à moufle pendant 30 minutes de 200 g de ladite chaux vive à réactivité ralentie.

La chaux vive à réactivité ralentie présente un Tₘ mesuré selon la norme EN 459-2 : 2010 E supérieur ou égal à 65°C, de préférence supérieur ou égal à 67°C, et plus préférentiellement supérieur ou égal à 69°C.

En outre, de manière avantageuse, la chaux vive à réactivité ralentie selon la présente invention présente une valeur de t₆₀ comprise entre 8 et 12 min.

De préférence, la chaux vive à réactivité ralentie selon l'invention présente en outre une valeur de T₅ comprise entre 25 et 50°C, de préférence comprise entre 30 et 45°C.

En particulier, la chaux vive à réactivité ralentie selon l'invention présente une valeur de T₂ comprise entre 21 et 40°C, de préférence comprise entre 25 et 35°C.

Dans une variante avantageuse selon l'invention, la chaux vive à réactivité ralentie présente une valeur de t₆₀ comprise entre 5 et 8 min.

Dans cette variante, la chaux vive à réactivité ralentie selon l'invention présente en outre une valeur de T₅ de préférence comprise entre 35 et 65°C, en particulier comprise entre 40 et 60°C.

Dans cette variante, la chaux vive à réactivité ralentie selon l'invention présente en outre une valeur de T₂ de préférence comprise entre 25 et 55°C, en particulier comprise entre 35 et 50°C.

Dans une autre variante avantageuse selon l'invention, la chaux vive à réactivité ralentie selon l'invention présente une valeur de t₆₀ comprise entre 12 et 18 min.

Dans cette autre variante, la chaux vive à réactivité ralentie selon l'invention présente en outre une valeur de T₅ de préférence comprise entre 21 et 40°C, en particulier comprise entre 25 et 30°C.

Dans cette variante, la chaux vive à réactivité ralentie selon l'invention présente en outre une valeur de T₂ de préférence comprise entre 21 et 30°C, en particulier comprise entre 21 et 25°C.

Dans une forme de réalisation avantageuse, la chaux vive à réactivité ralentie selon l'invention présente une surface spécifique mesurée par manométrie d'adsorption d'azote après dégazage sous vide à 190°C pendant au moins 2 heures et calculée selon la méthode BET multi-points telle que décrite dans la norme ISO 9277 : 2010 E supérieure ou égale à 0,8 m²/g, de préférence supérieure ou égale 1 m²/g.

Dans une autre forme de réalisation avantageuse, la chaux vive à réactivité ralentie selon la présente invention présente une teneur en CaO supérieure ou égale à 90 % en poids, préférentiellement supérieure ou égale à 92 % en poids, et de manière encore plus préférentielle supérieure ou égale à 95 % en poids par rapport au poids total de ladite chaux vive à réactivité ralentie.

Avantageusement, la teneur en H₂O de la chaux vive à réactivité ralentie selon l'invention, présente sous forme d'hydroxyde, en particulier sous forme de Ca(OH)₂, est inférieure ou égale à 3 % en poids, de préférence inférieure ou égale à 2 % en poids, plus préférentiellement inférieure ou égale à 1,5 % en poids par rapport au poids total de ladite chaux vive à réactivité ralentie.

Dans une forme de réalisation avantageuse, la teneur en CO₂ de la chaux vive à réactivité ralentie selon la présente invention, présent sous forme de carbonate, en particulier sous forme de CaCO₃, est inférieure ou égale à 3 % en poids, de préférence inférieure ou égale à 2 % en poids, plus préférentiellement inférieure ou égale à 1,5 % en poids par rapport au poids total de ladite chaux vive à réactivité ralentie.

De plus, selon l'invention, la chaux vive à réactivité ralentie présente une teneur en soufre inférieure ou égale à 0,2 % en poids, de préférence inférieure ou égale à 0,1 % en poids par rapport au poids total de la chaux vive à réactivité ralentie.

En outre, toujours selon l'invention, la chaux vive à réactivité ralentie présente une teneur en carbone organique inférieure ou égale à 0,5 % en poids, de préférence inférieure ou égale à 0,3 % en poids, préférentiellement inférieure ou égale à 0,2 % en poids, et plus préférentiellement inférieure ou égale à 0,1 % en poids, en particulier inférieure ou égale à 0,08 % en poids, plus particulièrement inférieure ou égale à 0,04 % en poids par rapport au poids total de la chaux vive à réactivité ralentie.

Les teneurs respectives en H₂O, CO₂, soufre et carbone organique de la chaux vive à réactivité ralentie selon la présente invention peuvent facilement être déterminées par des méthodes conventionnelles. Par exemple, la teneur en H₂O peut être déterminée par une mesure de la perte au feu. Celle-ci consiste à mesurer, selon la norme EN 459-2 : 2010 E, la perte de masse engendrée à 550°C.

La teneur en CO₂ peut être déterminée par mesure du CO₂ volumétrique selon la norme EN 459-2 : 2010 E.

Les teneurs en soufre et en carbone total peuvent être respectivement déterminées par analyse carbone/soufre (C/S) selon la norme ASTM C25 (1999).

Enfin, le pourcentage de carbone organique présent dans la chaux vive à réactivité ralentie de la présente invention peut être calculé par différence entre le pourcentage de carbone total (déterminé par l'analyse C/S) et le pourcentage de carbone d'origine minérale, autrement dit la teneur en CO₂.

Il est en effet connu que la présence de composés organiques dans la chaux génère des problèmes lors de l'application de celle-ci en béton cellulaire.

Dans un mode particulier de la présente invention, la chaux vive à réactivité retardée selon l'invention présente une valeur de t₆₀ supérieure ou égale à 8 min et une teneur en carbone organique inférieure ou égale 0,3% en poids, de préférence inférieure ou égale à 0,2 % en poids, et plus préférentiellement inférieure ou égale à 0,1 % en poids, en particulier inférieure ou égale à 0,08 % en poids, plus particulièrement inférieure ou égale à 0,04 % en poids par rapport au poids total de la chaux vive à réactivité ralentie.

Dans un autre mode particulier de la présente invention, la chaux vive à réactivité retardée selon l'invention présente une valeur de t₆₀ supérieure ou égale à 12 min et une teneur en carbone organique inférieure ou égale 0,5% en poids, de préférence inférieure ou égale à 0,3 % en poids, préférentiellement inférieure ou égale à 0,2% en poids et plus préférentiellement inférieure ou égale à 0,1 % en poids, en particulier inférieure ou égale à 0,08 % en poids, plus particulièrement inférieure ou égale à 0,04 % en poids par rapport au poids total de la chaux vive à réactivité ralentie.

D'autres formes de réalisation de la chaux vive à réactivité ralentie suivant l'invention sont indiquées dans les revendications annexées.

L'invention se rapporte également à une composition à base de chaux vive à réactivité ralentie selon l'invention. La composition selon l'invention peut alors comprendre des additifs comme du gypse, de l'anhydrite, du ciment, du sable et/ou encore d'autres chaux.

L'invention a aussi pour objet un procédé de fabrication d'une chaux vive à réactivité ralentie comprenant les étapes suivantes :
(i) amenée d'une chaux vive présentant une valeur de réactivité à l'eau t₆₀, mesurée selon le test de réactivité décrit dans la norme EN 459-2 : 2010 E comprise entre 1 et 5 min, et de préférence comprise entre 1 et 4 min, à une température prédéterminée supérieure ou égale à 50°C, de préférence supérieure ou égale à 70°C, et inférieure ou égale à 300°C, de préférence inférieure ou égale à 250°C,
(ii) amenée d'un gaz comprenant de la vapeur d'eau à un pourcentage volumique compris entre 1 et 25 % par rapport au volume total dudit gaz et du dioxyde de carbone à un pourcentage volumique compris entre 5 et 40 % par rapport au volume total de gaz, ledit gaz présentant une température prédéterminée supérieure ou égale à 50°C, de préférence supérieure ou égale à 70°C, et inférieure ou égale à 300°C, de préférence inférieure ou égale à 250°C,
(iii) Traitement de ladite chaux vive amenée par un flux dudit gaz avant, pendant ou après ladite amenée à ladite température de ladite chaux vive et pendant une période de temps prédéterminée pour former ladite chaux vive à réactivité ralentie, et
(iv) Refroidissement de ladite chaux vive à réactivité ralentie dans un milieu confiné essentiellement exempt d'eau, de vapeur d'eau et de dioxyde de carbone.

Avantageusement, ladite étape (iii) est effectuée jusqu'à obtention d'une chaux vive à réactivité ralentie présentant une réactivité à l'eau t₆₀ selon le test de réactivité EN 459-2 : 2010 E supérieure ou égale à 5 minutes et inférieure ou égale à 18 minutes.

Comme on peut le constater, dans le procédé selon la présente invention, le gaz permettant le traitement de la chaux vive comprend de la vapeur d'eau à un pourcentage volumique compris entre 1 et 25 % par rapport au volume total dudit gaz et comprend également du dioxyde de carbone à un pourcentage volumique compris entre 5 et 40 % par rapport au volume total de gaz. Ce gaz présente une température prédéterminée comprise entre 50°C et 300°C. La température prédéterminée du gaz est choisie dans la plage susdite afin d'être suffisante pour que la vapeur d'eau contenue dans le gaz ne se condense pas (absence d'eau liquide).

La chaux vive est amenée à une température prédéterminée également comprise entre 50°C et 300°C, et est traitée par le gaz. La température prédéterminée de la chaux vive est aussi choisie dans la plage susdite de température afin d'être suffisante pour que la vapeur d'eau contenue dans le gaz ne se condense pas à son contact durant le traitement de la chaux vive par le gaz (absence d'eau liquide).

Ces températures prédéterminées seront choisies également en fonction des pourcentages volumiques choisis de vapeur d'eau et de CO₂ dans le gaz de traitement dès lors que les points de rosée du gaz sont modifiés en fonction de leur concentration.

Le choix de ces températures est clairement dicté par l'absence souhaitée d'eau liquide lors du traitement de la chaux vive par le flux de gaz.

En effet, il a été observé selon la présente invention que lorsque de l'eau liquide est présente, elle impacte directement la valeur de Tₘ de la chaux vive à réactivité ralentie obtenue en la diminuant relativement fortement, comme dans le cas par exemple du brevet GB 1 585 483, ainsi que lorsque les concentrations en vapeur d'eau ou en CO₂ ne sont pas optimisées dans les plages susdites.

Selon la présente invention, la période de temps prédéterminée du traitement de la chaux vive par le flux de gaz est la période de temps suffisante pour obtenir une chaux vive à réactivité ralentie dans laquelle la quantité d'eau captée par ladite chaux vive lors dudit traitement est inférieure ou égale à 0,5 % en poids, de préférence inférieure ou égale à 0,3 % en poids par rapport au poids de la chaux vive à réactivité ralentie et dans laquelle la quantité de CO₂ captée par ladite chaux vive est inférieure ou égale à 0,8 % en poids, de préférence inférieure ou égale à 0,6 % en poids par rapport au poids de la chaux vive à réactivité ralentie.

Lors du refroidissement, la chaux vive à réactivité ralentie est alors confinée dans un espace d'entreposage sensiblement exempt de CO₂ et d'eau ainsi que de vapeur d'eau afin que la quantité totale d'eau et de CO₂ captée pendant le refroidissement par ladite chaux vive soit inférieure ou égale à 0,1 % en poids et que la quantité totale d'eau et de CO₂ captée par ladite chaux vive pendant l'intégralité du procédé selon l'invention soit comprise entre 0,1 et 1 % en poids par rapport au poids de la chaux vive à réactivité ralentie.

Dans une forme de réalisation préférentielle du procédé selon la présente invention, ladite chaux vive amenée est une chaux vive prélevée d'un four de cuisson à ladite température prédéterminée. En effet, lorsque la structure du four le permet, la chaux vive peut être directement prélevée dans une zone de prélèvement, avant d'être refroidie, directement à la température prédéterminée ou à une température supérieure à la température prédéterminée afin d'être traitée directement en sortie de four par le flux de gaz.

Dans une autre forme de réalisation selon l'invention, le traitement de ladite chaux vive par ledit gaz est directement effectué dans la zone de refroidissement d'un four à chaux présentant une température comprise entre 50°C et 300°C.

Dans une variante du procédé selon l'invention, ladite chaux vive amenée est issue d'un préchauffage à ladite température prédéterminée.

Avantageusement, dans le procédé selon la présente invention, ladite chaux vive amenée est sous forme de particules fines de chaux vive présentant un d₁₀₀ inférieur ou égal à 10 mm, de préférence inférieur ou égal à 5 mm, et de préférence inférieure ou égal à 3 mm.

Le procédé selon la présente invention permet en effet de valoriser une gamme de particules de petite taille produites en quantité relativement importante lors de la cuisson des roches calcaires et qui sont cependant peu exploitées actuellement. En effet, lors du traitement par cuisson des roches calcaires, l'abrasion due au mouvement des roches dans le four produit une quantité de particules relativement fines qui sont souvent mises au rebut.

Dans une variante également avantageuse du procédé selon la présente invention, ladite chaux vive amenée est sous forme de broyat de chaux vives, ledit broyat présentant un d₉₅ inférieur ou égal à 200 µm, de préférence inférieur ou égal à 100 µm.

On prévoit aussi selon la présente invention la possibilité d'utiliser des fines particules qui sont ensuite broyées ou moulues, à l'aide par exemple d'un broyeur à marteaux, d'un broyeur à boulets, d'un broyeur pendulaire vertical ou d'un broyeur à meules, afin d'obtenir un mélange homogène en taille de particules, et plutôt pulvérulent.

Le broyat peut donc être issu d'un mélange de différentes tailles de particules de chaux vive, mais pas forcément. Selon la présente invention, il est d'ailleurs envisagé que le traitement de la chaux vive par le flux de gaz soit directement réalisé dans une enceinte de broyage, éventuellement chauffée, ou en récupérant la chaleur issue de la friction des particules durant le broyage.

Avantageusement, ledit traitement par ledit flux dudit gaz de ladite chaux vive amenée est réalisé sous agitation, par exemple à l'aide d'un mélangeur à poudre tel qu'un mélangeur à ruban, à vis, à pales ou soc de charrue, ou bien encore à palettes, afin d'améliorer le contact solide-gaz.

Dans une variante avantageuse du procédé selon l'invention, ledit traitement par ledit flux dudit gaz de ladite chaux vive amenée est réalisé à l'aide d'un lit fluidisé.

Dans encore un autre mode de réalisation du procédé selon la présente invention, ladite chaux vive est sous forme de cailloux de chaux vive présentant un d₁₀ supérieur ou égal à 5 mm, de préférence supérieur ou égal à 10 mm et de préférence supérieur ou égal à 20 mm et un d₁₀₀ inférieur ou égal à 60 mm, de préférence inférieur ou égal à 50 mm et de préférence inférieur ou égal à 40 mm.

Dans un mode alternatif préféré selon la présente invention, le traitement de ladite chaux vive amenée par ledit flux de gaz est réalisé de manière statique, par exemple par passage dudit gaz au travers d'un lit fixe de chaux vive.

Avantageusement, ledit gaz comprend au moins des gaz de fumées de fours de cuisson des calcaires et/ou des gaz de combustion d'un combustible tel que par exemple le gaz naturel, le lignite, l'anthracite ou la poudre de coke.

Dans tous les cas, selon la présente invention, il est préférable que ledit gaz présente une teneur en soufre inférieure ou égale à 0,05 % en volume par rapport au volume total dudit gaz.

Dans encore un mode de réalisation particulier selon la présente invention, ledit préchauffage de la chaux vive est réalisé à l'aide d'une double enveloppe.

Dans une variante selon l'invention, ledit préchauffage de la chaux vive est réalisé par mise en contact de ladite chaux vive avec un gaz préchauffé tel que par exemple de l'air ou encore avec ledit gaz de traitement de la chaux vive.

Avantageusement, le préchauffage du gaz est réalisé à l'aide d'un échangeur de chaleur tel qu'une vis de préchauffage, un mélangeur à ruban, un mélangeur à vis, un mélangeur à pales ou soc de charrue ou bien encore un mélangeur à palettes.

Dans une autre variante selon l'invention, la chaux vive est amenée à température ambiante et ledit gaz de traitement est amené à une température suffisamment élevée pour permettre de préchauffer rapidement ladite chaux vive et donc ainsi d'éviter la condensation de la vapeur d'eau contenue dans ledit gaz lors de son contact avec la chaux.

Dans une forme préférée du procédé selon la présente invention, le préchauffage de la chaux vive est réalisé à l'aide d'un échangeur de chaleur tel qu'une vis de préchauffage, un mélangeur à ruban, un mélangeur à vis, un mélangeur à pales ou soc de charrue ou bien encore un mélangeur à palettes.

Dans un mode de réalisation du procédé selon la présente invention, la chaux vive est traitée par ledit flux dudit gaz de manière discontinue.

Dans un autre mode de réalisation du procédé selon la présente invention, la chaux vive est traitée par ledit flux dudit gaz de manière continue.

D'autres modes de réalisation du procédé selon la présente invention sont mentionnées dans les revendications annexées.

La présente invention se rapporte également à une utilisation de la chaux vive à réactivité ralentie selon l'invention dans un procédé de fabrication de silicate de calcium hydraté (SCH).

Avantageusement, la chaux vive à réactivité ralentie selon l'invention est utilisée dans un procédé de fabrication de béton cellulaire.

Dans une autre forme d'utilisation, la chaux vive à réactivité ralentie est utilisée dans un procédé de fabrication de litières pour animaux.

D'autres utilisations sont mentionnées dans les revendications annexées.

D'autres caractéristiques, détails et avantages de l'invention ressortiront de la description donnée ci-après, à titre non limitatif et en faisant référence aux exemples.

La présente invention concerne donc une chaux vive à réactivité ralentie qui d'une part se caractérise, selon le test de réactivité de norme européenne EN 459-2 : 2010 E, par une valeur de t₆₀ comprise entre 5 et 18 min.

Une autre manière de caractériser la chaux vive à réactivité ralentie issue de chaux vive à cuisson douce est la mesure d'une propriété de réversibilité, à savoir que lorsque cette chaux vive est traitée thermiquement à 700°C, la valeur du t₆₀ résultant, appelé dès lors t₆₀rev, est au moins 3 fois plus petite que la valeur du t₆₀ de ladite chaux vive à réactivité ralentie et la valeur de Tₘ résultant, appelé dès lors Tₘrev, est supérieure à la valeur du Tₘ de ladite chaux vive à réactivité ralentie mais n'est pas augmentée de plus de 5°C, préférentiellement 3°C, et encore préférentiellement 2°C, par rapport à la valeur du Tₘ de ladite chaux vive à réactivité ralentie.

Le traitement thermique effectué lors de ce test de réversibilité est réalisé à 700°C dans un four électrique à moufle. Plus précisément, 200 g de chaux vive moulue à réactivité ralentie sont étalés dans une gazette de 30 cm sur 20 cm et sont enfournés directement à 700°C dans un four à moufle. Au bout de 30 min, le traitement thermique est arrêté et la chaux vive moulue est transférée dans un seau métallique fermé où elle est laissée à refroidir pendant 2h. Ladite chaux vive à réactivité ralentie selon l'invention se caractérise par ailleurs par une valeur de Tₘ supérieure à 65°C, de préférence supérieure ou égale à 67°C, et encore préférentiellement supérieure ou égale à 69°C.

Ladite chaux vive à réactivité ralentie selon l'invention se caractérise également préférentiellement par une courbe de réactivité relativement linéaire.

La chaux vive à réactivité ralentie selon la présente invention présente la particularité d'avoir, selon le test de réactivité de norme européenne EN 459-2 : 2010 E, une valeur de t₆₀ relativement élevée comprise entre 5 et 18 min tout en présentant une propriété de réversibilité qui est facilement mise en évidence par un traitement thermique à 700°C et qui conduit à un t₆₀ résultant, appelé dès lors t₆₀rev, au moins 3 fois inférieur à son t₆₀ initial.

Cette caractéristique distingue les chaux vives à réactivité ralentie issues de cuisson douce des chaux vives à réactivité ralentie surcuites.

Par ailleurs, la chaux vive à réactivité ralentie selon la présente invention se distingue des chaux vives à réactivité ralentie issues d'une cuisson douce selon l'art antérieur en conservant une valeur de Tₘ relativement élevée par rapport à la valeur de Tₘ de la chaux vive initiale.

De plus, la chaux vive à réactivité ralentie selon la présente invention ne contient pas d'additifs organiques hormis ceux potentiellement utilisés pour le broyage de la chaux vive initiale tels que le diéthylène glycol, la triéthanol amine et analogues et leurs mélanges à des teneurs de l'ordre de 0,05 % à 0,1 % en poids, par rapport au poids total de la chaux vive initiale. Cela ne veut pas dire qu'il n'est pas possible d'en ajouter a postériori, mais cela signifie que l'ajout d'additifs organiques n'est pas nécessaire à l'obtention de ladite chaux vive à réactivité ralentie selon la présente invention.

La chaux vive à réactivité ralentie selon l'invention présente aussi l'intérêt de minimiser la formation de larges agglomérats de chaux hydratée (grits) en présence d'une eau d'extinction contenant des silicates. Cette caractéristique est particulièrement avantageuse pour la fabrication du béton cellulaire, puisque, dans ce procédé, la suspension mise en œuvre pour produire le "gâteau" contient une certaine quantité de sulfate de calcium tel que du gypse ou de l'anhydrite et que la présence de larges agglomérats est à éviter puisque, d'une part, ils réduisent la quantité de chaux susceptible de réagir avec les autres matières premières mises en œuvre dans le procédé de fabrication de béton cellulaire et, d'autre part, ils empêchent l'obtention d'un béton cellulaire de bonne qualité.

La chaux vive à réactivité ralentie selon l'invention présente ainsi, dans une certaine mesure, les apparences d'une chaux vive surcuite mais est en réalité une chaux vive issue d'une calcination douce, modifiée par un post-traitement de surface. Ledit traitement de surface consiste à très légèrement hydrater et carbonater toute la surface accessible au gaz de ladite chaux vive.

Quelle que soit la chaux vive considérée, elle peut être naturellement déjà partiellement hydratée et/ou carbonatée au niveau de sa surface, notamment parce qu'au cours de sa fabrication ou bien postérieurement à sa fabrication, elle a été en contact avec l'atmosphère (air ambiant humide, atmosphère plus ou moins riche en dioxyde de carbone...).

L'hydratation et/ou la carbonatation partielle de la surface signifie ici qu'en certaines zones de la surface, l'hydratation et/ou la carbonatation est bien réelle alors qu'en d'autres zones, elle est nulle ou quasi nulle.

C'est donc un traitement de surface inhomogène et on comprend bien que pour que toute la surface de chaux vive accessible au gaz soit hydratée et/ou carbonatée, il faudrait que le taux d'hydratation et/ou de carbonatation soit très important, ce qui altèrerait de manière très significative la réactivité de la chaux vive dans l'eau, en provoquant notamment une diminution de la valeur du Tₘ.

La particularité de la chaux vive à réactivité ralentie selon la présente invention est que l'hydratation et la carbonatation de surface sont réalisées de manière homogène et quantitative. Ainsi, le procédé d'obtention est optimisé pour que le traitement de surface soit le plus efficace possible tout en limitant au maximum l'augmentation de la teneur en H₂O et en CO₂ dans le produit final. Le traitement de surface selon la présente invention conduit à ralentir fortement la réactivité de la chaux vive initiale tout en conservant une valeur de Tₘ relativement élevée par rapport à la valeur de Tₘ de la chaux vive initiale.

Au départ d'une chaux vive donnée (caractérisée par une valeur de t₆₀ comprise entre 1 et 5 min et de préférence entre 1 et 4 min), c'est l'intensité du traitement qui définit les caractéristiques finales de la chaux vive à réactivité ralentie.

Plus le traitement est important et plus la réactivité est ralentie. Par traitement important, on entend un traitement par exemple plus long, ou bien encore réalisé en utilisant une concentration plus importante en vapeur d'eau dans le gaz, ou bien encore réalisé à une température plus élevée, ce qui augmente la cinétique des réactions d'hydratation et de recarbonatation.

Mais la réactivité de la chaux ralentie selon la présente invention peut aussi être modifiée et/ou optimisée en réalisant des mélanges. Par exemple, une chaux fortement ralentie selon la présente invention peut être mélangée en proportion variable à une chaux moins fortement ralentie selon la présente invention, ce qui permet d'ajuster la réactivité finale de la chaux vive à réactivité ralentie.

Le procédé de fabrication d'une chaux vive à réactivité ralentie selon la présente invention comprend les étapes suivantes :
i) Une amenée d'une chaux vive se caractérisant, selon le test de réactivité de norme européenne EN 459-2 : 2010 E, par une valeur de t₆₀ comprise entre 1 et 5 min, et de préférence comprise entre 1 et 4 min, à une température prédéterminée supérieure ou égale à 50°C, de préférence supérieure ou égale à 70°C, et inférieure ou égale à 300°C, de préférence inférieure ou égale à 250°C,
ii) Une amenée d'un gaz, contenant entre autres de la vapeur d'eau dont le pourcentage volumique est compris entre 1 et 25 % et du dioxyde de carbone dont le pourcentage volumique est compris entre 5 et 40 %, ledit gaz présentant une température prédéterminée supérieure ou égale à 50°C, de préférence supérieure ou égale à 70°C, et inférieure ou égale à 300°C, de préférence inférieure ou égale à 250°C, et au moins suffisante pour que la vapeur d'eau contenue dans le gaz ne se condense pas (absence d'eau liquide) ;
iii) L'amenée en température de ladite chaux vive pour atteindre la température prédéterminée comprise entre 50°C et 300°C est effectuée à une température au moins suffisante pour que la vapeur d'eau contenue dans le gaz de l'étape ii ne se condense pas à son contact à l'étape iv (absence d'eau liquide) ;
iv) Un traitement de ladite chaux vive sous flux dudit gaz avant, pendant ou après ladite amenée à ladite température de ladite chaux vive, de telle sorte que la quantité d'eau captée par ladite chaux vive soit inférieure ou égale à 0,5 % en poids, de préférence inférieure ou égale à 0,3 % en poids, que la quantité de CO₂ captée par ladite chaux vive soit inférieure ou égale à 0,8 % en poids, de préférence inférieure ou égale à 0,6 % en poids, et de telle sorte que la quantité totale d'eau et de CO₂ captée par ladite chaux vive pendant ce traitement soit comprise entre 0,1 et 1,0 % en poids, par rapport au poids de la chaux vive à réactivité ralentie ;
v) Un refroidissement dans un milieu confiné exempt d'eau, de vapeur d'eau et de dioxyde de carbone, en particulier de telle sorte que la quantité totale d'eau et de CO₂ captée par ladite chaux vive pendant le refroidissement soit inférieure ou égale à 0,1 % en poids par rapport au poids de la chaux vive à réactivité ralentie.
Des aspects préférés mais non limitatifs de ce procédé de fabrication d'une chaux vive à réactivité ralentie selon la présente invention, pris seuls ou en combinaison, sont les suivants :
- la chaux vive amenée est sous forme de fines présentant une taille inférieure à 10 mm, de préférence inférieure à 5 mm, et de préférence inférieure à 3 mm ;
- la chaux vive amenée est moulue ou broyée et présente une taille inférieure à 200 µm, de préférence inférieure à 100 µm ;
- la chaux vive amenée est sous forme de cailloux et présente une taille de particules d₁₀ supérieure ou égale à 5 mm, de préférence supérieure ou égale à 10 mm et de préférence supérieure ou égale à 20 mm et une taille de particule d₁₀₀ inférieure ou égale à 60 mm, de préférence inférieure ou égale à 50 mm et de préférence inférieure ou égale à 40 mm ;
- le flux de gaz utilisé pour le traitement de la chaux vive provient des fours de cuisson des calcaires (fumées des fours) ;
- le flux de gaz utilisé pour le traitement de la chaux vive provient directement de la combustion d'une combustible tel que par exemple le gaz naturel, le lignite, l'anthracite ou la poudre de coke ;
- le flux de gaz utilisé pour le traitement de la chaux vive contient une quantité de soufre inférieure ou égale à 0,05 % en volume par rapport au volume total dudit gaz ;
- le flux de gaz utilisé pour le traitement de la chaux vive provient d'un gaz préchauffé, par exemple à l'aide d'un échangeur de chaleur;
- le préchauffage éventuel de la chaux vive est réalisé à l'aide d'une double enveloppe ;
- le préchauffage éventuel de la chaux vive est réalisé à l'aide d'un échangeur de chaleur tel qu'une vis de préchauffage, un mélangeur à ruban, à vis, à pale ou soc de charrue, ou bien encore un mélangeur à palettes ;
- le préchauffage éventuel de la chaux vive est réalisé par mise en contact avec un gaz préchauffé tel que par exemple de l'azote, de l'air ou encore le gaz de l'étape (ii) ;
- le traitement de la chaux vive par le flux de gaz est réalisé sous agitation, par exemple à l'aide d'un mélangeur à poudre pour favoriser le contact solide / gaz, la chaux étant alors plus particulièrement soit sous la forme de fines présentant une taille inférieure à 10 mm, de préférence inférieure à 5 mm, et de préférence inférieure à 3 mm, soit sous la forme d'une poudre moulue présentant une taille inférieure à 200 µm, de préférence inférieure à 100 µm ;
- le traitement de la chaux vive par le flux de gaz est réalisé à l'aide d'un lit fluidisé, la chaux étant alors plus particulièrement soit sous la forme de fines présentant une taille inférieure à 10 mm, de préférence inférieure à 5 mm, et de préférence inférieure à 3 mm, soit sous la forme d'une poudre moulue présentant une taille inférieure à 200 µm, de préférence inférieure à 100 µm ;
- le traitement de la chaux vive par le flux de gaz est réalisé de manière statique, par exemple par passage dudit gaz au travers d'un lit fixe de chaux vive, la chaux étant alors de préférence sous la forme de cailloux présentant une taille supérieure ou égale à 5 mm, de préférence supérieure ou égale à 10 mm et de préférence supérieure ou égale à 20 mm et une taille inférieure ou égale à 60 mm, de préférence inférieure ou égale à 50 mm et de préférence inférieure ou égale à 40 mm.
- le traitement de la chaux vive par le flux de gaz est directement réalisé dans une enceinte de broyage, la chaux étant alors plus particulièrement soit sous la forme de fines présentant une taille inférieure à 10 mm, de préférence inférieure à 5 mm, et de préférence inférieure à 3 mm, soit sous la forme de cailloux présentant une taille supérieure ou égale à 5 mm, de préférence supérieure ou égale à 10 mm et de préférence supérieure ou égale à 20 mm et une taille inférieure ou égale à 60 mm, de préférence inférieure ou égale à 50 mm et de préférence inférieure ou égale à 40 mm ;

Le procédé pour fabriquer une chaux vive à réactivité ralentie selon l'invention présente la particularité d'utiliser comme matière première une chaux vive se caractérisant, selon le test de réactivité de norme européenne EN 459-2 : 2010 E, par une valeur de t₆₀ comprise entre 1 et 5 min et de préférence entre 1 et 4 min, donc une chaux que l'on pourra qualifier de chaux vive « à cuisson douce ». La limite basse de la valeur du t₆₀ est liée à la difficulté qu'il y aurait à décaler fortement la valeur du t₆₀ entre 5 et 18 min par le procédé de la présente invention au départ d'une chaux vive présentant une valeur de t₆₀ inférieure à 1 min sans impacter fortement la valeur du Tₘ. La limite haute de la valeur du t₆₀ est liée principalement à des aspects techniques et économiques. Une chaux vive qui présente une valeur de t₆₀ supérieure à 4 min, de préférence supérieure à 5 min, est une chaux vive surcuite qui présente donc une surface accessible aux gaz plus limitée, et c'est donc une chaux vive qui par nature est moins sensible au procédé de la présente invention. Les intérêts techniques et économiques de mettre en œuvre le procédé de la présente invention ne seraient donc pas évidents a priori.

Le béton cellulaire est produit d'une manière bien connue de l'homme de l'art. Celui-ci est obtenu au départ d'un mélange de matières premières riches en silice (sables broyés ou cendres volantes), de ciment, d'une source de sulfate telle que le gypse ou l'anhydrite, d'une chaux vive, d'une poudre à lever comme par exemple l'aluminium sous forme métallique et d'eau. Dans un premier temps, la chaux vive réagit avec l'eau pour former de la chaux hydratée, ce qui génère une certaine quantité de chaleur. La chaleur dégagée conduit à une augmentation de la température qui favorise la formation d'hydrogène gazeux par réaction de l'eau au contact de l'aluminium métallique, ce qui conduit ainsi à une expansion du mélange et l'obtention d'un milieu poreux communément appelé « gâteau ». Parallèlement, la chaux hydratée réagit avec les autres constituants ce qui conduit à la formation de silicates de calcium hydratés (CSH) et donc à la consolidation de la structure poreuse du gâteau. La vitesse de la réaction d'hydratation entre la chaux vive et l'eau est déterminante car elle va en partie conditionner la réussite du procédé de fabrication du béton cellulaire. Il ne faut pas qu'elle soit trop rapide au risque de conduire à un dégagement de chaleur trop violent entrainant une montée en température du gâteau elle-même trop rapide ce qui conduit à une trop forte expansion du gâteau avant sa consolidation et donc à son effondrement. Il ne faut pas non plus qu'elle soit trop lente au risque d'avoir une consolidation trop précoce avant que l'expansion ne soit terminée (apparition de craquelures lors de l'expansion). Lorsque le gâteau est bien consolidé, il est découpé sous la forme de briques et le béton cellulaire est obtenu à l'issue d'un traitement hydrothermal en autoclave qui lui confère ses propriétés mécaniques finales.

En pratique, la consolidation du « gâteau » doit être réalisée dans une période de temps appropriée. La réaction d'hydratation entre la chaux vive et l'eau dégage de la chaleur mais il est nécessaire de bien contrôler ce dégagement de chaleur qui doit être ni trop rapide ni trop lent. La chaux vive surcuite est ainsi très largement utilisée pour la fabrication du béton cellulaire, car elle présente une cinétique d'hydratation et donc de dégagement de chaleur plutôt bien adaptée au procédé de fabrication du béton cellulaire. Néanmoins comme la chaux vive surcuite n'est chimiquement pas très réactive, le temps de consolidation du « gâteau » est relativement long, ce qui ralentit le processus de fabrication. La chaux vive à réactivité ralentie selon la présente invention permet d'optimiser le temps de consolidation du « gâteau ».

### Exemples.-

### Exemple 1.- chaux vive moulue à réactivité ralentie t₆₀ = 5,7 min

Au départ de fines de chaux vives industrielles 2-8 mm provenant du criblage secondaire de chaux en roche produites en four PFRK (Parallel Flow Regenerative Kiln) et en four PRK (Pre-heated Rotary Kiln) dans l'usine de Flandersbach du groupe Lhoist, on prépare une chaux 0-90 µm.

La chaux moulue ainsi obtenue, appelée « Weissfeinklak-1a », contient plus de 95 % en poids de particules inférieures à 90 µm. Elle contient 95 % en poids de CaO, 1,3 % en poids de MgO, 0,6 % en poids de CO₂ résiduel (présent sous la forme de carbonate de calcium) et 0,9 % en poids d'H₂O résiduel (présent sous la forme d'hydroxyde de calcium). Elle présente des valeurs de t₆₀ de 1,9 min, de T₂ de 63,3°C, de T₅ de 73,7°C et de Tₘ de 75,1°C dans le test de réactivité de norme européenne EN 459-2 : 2010 E.

On utilise un mélangeur à poudre Lödige de type MR 20 (volume intérieur de 20 dm³) équipé d'une entrée et d'une sortie pour les gaz et d'une double enveloppe permettant un chauffage indirect par recirculation d'huile. On remplit celui-ci avec 6 kg de chaux vive moulue et on met l'ensemble sous agitation à 2,5 m/s (vitesse en bout de pale).

On réalise un préchauffage pendant 30 min sous un flux d'azote de 22 dm³/min préalablement chauffé à 200°C et en utilisant une recirculation d'huile à 200°C, de telle sorte que la chaux vive moulue soit à une température de 170°C. On substitue le flux d'azote de 22 dm³/min préalablement chauffé à 200°C par un flux de 22 dm³/min d'azote lui-même préalablement chauffé à 200°C contenant 15 % en volume de CO₂ et 2,5 % en volume d'H₂O.

Au bout de 17 min, le traitement est arrêté et la chaux vive moulue est transférée dans un seau métallique fermé où elle est laissée à refroidir pendant 2 h. La chaux vive moulue ainsi obtenue est appelée selon l'invention chaux vive moulue à réactivité ralentie. Elle contient 1,0 % en poids de CO₂ résiduel et 1,2 % en poids d'H₂O résiduel et présente des valeurs de t₆₀ de 5,7 min, de T₂ de 35,3°C, de T₅ de 52,9°C et de Tₘ de 73,4°C dans le test de réactivité de norme européenne EN 459-2 : 2010 E. Elle présente par ailleurs une surface spécifique BET de 1,2 m²/g et contient 0,03 % en poids de soufre et moins de 0,0015 % en poids de carbone organique.

On effectue alors un test de réversibilité. Pour cela, 200 g de cette chaux vive moulue à réactivité ralentie sont étalés dans une gazette de 30 cm sur 20 cm et sont enfournés directement à 700°C dans un four à moufle. Au bout de 30 min, le traitement thermique est arrêté et la chaux vive moulue est transférée dans un seau métallique fermée où elle est laissée à refroidir pendant 2 h.

La chaux vive moulue résultante présente des valeurs de t₆₀rev de 1,6 min, de T₂rev de 64,8°C, de T₅rev de 74,2°C et de Tₘrev de 75,0°C mesurés selon le test de réactivité à l'eau EN 459-2 : 2010 E.

### Exemple 2.- chaux vive moulue à réactivité ralentie t₆₀ = 8,0 min

Une chaux vive moulue à réactivité ralentie est obtenue selon le même protocole qu'à l'exemple 1 mais le traitement est réalisé en utilisant un flux de 22 dm³/min d'azote contenant 15 % en volume de CO₂ et 7,5 % en volume d'H₂O préalablement chauffé à 200°C. La chaux vive moulue à réactivité ralentie ainsi obtenue contient 1,2 % en poids de CO₂ résiduel et 1,1 en poids % d'H₂O résiduel. Elle présente des valeurs de t₆₀ de 8,0 min, de T₂ de 25,1°C, de T₅ de 34,7°C et de Tₘ de 73,6°C.

Cette chaux vive à réactivité ralentie est par ailleurs caractérisée par le test de réactivité selon la norme EN 459-2 : 2010 E dans lequel l'eau est substituée par de l'eau saturée en sulfate de calcium (2,4 g de gypse dans les 600 cm³ d'eau). A l'issu de ce test, le lait de chaux produit est filtré à travers un tamis de 200 µm. La matière solide récupérée sur le tamis est séchée à 105°C pendant 1 nuit. On obtient ainsi une masse finale de 4,8 g, ce qui représente une quantité d'agglomérats de taille supérieure à 200 µm égale à 3,2 % en poids par rapport aux 150 g de chaux vive à réactivité ralentie mis en œuvre dans ce test.

Lors du test de réversibilité, on observe des valeurs de t₆₀rev de 1,7 min, de T₂rev de 63,8°C, de T₅rev de 74,0°C et de Tₘrev de 75,4°C.

### Exemple 3.- chaux vive moulue à réactivité ralentie t₆₀ = 9,4 min

Une chaux vive moulue à réactivité ralentie est obtenue selon le même protocole qu'à l'exemple 2 mais le traitement est réalisé pendant 22 min au lieu de 17 min. La chaux vive moulue à réactivité ralentie ainsi obtenue contient 1,2 % en poids de CO₂ résiduel et 1,2 % en poids d'H₂O résiduel. Elle présente des valeurs de t₆₀ de 9,4 min, de T₂ de 24,6°C, de T₅ de 33,0°C et de Tₘ de 73,0°C. Elle présente par ailleurs une surface spécifique BET de 1,2 m²/g et contient 0,03 % en poids de soufre et moins de 0,0015 % en poids de carbone organique.

Lors du test de réversibilité, on observe des valeurs de t₆₀rev de 1,6 min, de T₂rev de 64,0°C, de T₅rev de 74,1°C et de Tₘrev de 75,2°C.

### Exemple 4.- chaux vive moulue à réactivité ralentie t₆₀ = 11,2 min

Une chaux vive moulue à réactivité ralentie est obtenue selon le même protocole qu'à l'exemple 1 mais en utilisant une chaux vive moulue 0-90 µm provenant du broyage de la fraction 0-10 mm d'un autre four industriel. Cette dernière contient 98 % en poids de CaO, 0,5 % en poids de MgO, 0,1 % en poids de CO₂ résiduel (présent sous la forme de carbonate de calcium) et 0,6 % en poids d'H₂O résiduel (présent sous la forme d'hydroxyde de calcium). Elle présente des valeurs de t₆₀ de 3,5 min, de T₂ de 49,9°C, de T₅ de 61,5°C et de Tₘ de 74,3°C.

La chaux vive moulue à réactivité ralentie résultante contient 0,2 % en poids de CO₂ résiduel et 0,8 % en poids d'H₂O résiduel. Elle présente des valeurs de t₆₀ de 11,2 min, de T₂ de 31,7°C, de T₅ de 41,0°C et de Tₘ de 74,0°C. Elle présente par ailleurs une surface spécifique de 1,4 m²/g et contient 0,03 % en poids de soufre et moins de 0,0015 % en poids de carbone organique.

Lors du test de réversibilité, on observe des valeurs de t₆₀rev de 3,5 min, de T₂rev de 52,7°C, de T₅rev de 62,9°C et de Tₘrev de 76,0°C.

| | Chaux vive moulue initiale | | | | Chaux vive moulue ralentie | | | | Chaux vive moulue issue du test de réversibilité | | | |
|---|---|---|---|---|---|---|---|---|---|---|---|---|
| | t60 (min) | T2 (°C) | T5 (°C) | Tm (°C) | t60 (min) | T2 (C°) | T5 (°C) | Tm (°C) | t60rev (min) | T2rev (°C) | T5rev (°C) | Tmrev (°C) |
| Exemple 1 | 1,9 | 63,3 | 73,7 | 75,1 | 5,7 | 35,3 | 52,9 | 73,4 | 1,6 | 64,8 | 74,2 | 75,0 |
| Exemple 2 | 1,9 | 63,3 | 73,7 | 75,1 | 8,0 | 25,1 | 34,7 | 73,6 | 1,7 | 63,8 | 74,0 | 75,4 |
| Exemple 3 | 1,9 | 63,3 | 73,7 | 75,1 | 9,4 | 24,6 | 33,0 | 73,0 | 1,6 | 64,0 | 74,1 | 75,2 |
| Exemple 4 | 3,5 | 49,9 | 61,5 | 74,3 | 11,2 | 31,7 | 41,0 | 74,0 | 3,5 | 52,7 | 62,9 | 76,0 |

### Exemple 5.- Production de béton cellulaire P2-0,40

Un lot de chaux vive à réactivité ralentie réalisée selon l'exemple 3 est utilisé comme matière première pour produire des blocs de béton cellulaire à l'échelle du laboratoire par une méthode standardisée, simulant une production industrielle.

Les autres matières premières utilisées pour cette production sont énumérées ci-dessous:
- Sable de quartz (Millisil W10, Quarzwerke Frechen)
- Ciment Portland CEM I - 42,5 R de l'usine PLZ Wittekind à Erwitte (D)
- Anhydrite de Cirkel à Haltern (D)
- Poudre d'aluminium Aquapor 9004 de Schlenck

Un jour avant la production à l'échelle laboratoire, des boues de retour ont été préparées pour simuler le recyclage de résidus de la production du béton cellulaire industrielle. Elles ont été préparées dans un seau de 10 dm³ sous agitation en ajoutant successivement dans 2,00 kg d'eau, 2,20 kg de sable, 1,00 kg de ciment, 0,60 kg de chaux vive à réactivité ralentie et 0,20 kg d'anhydrite, puis ont été conservées sous agitation dans ce seau fermé jusqu'à leur utilisation le lendemain.

Un mélange de ciment, de chaux à réactivité ralentie et d'anhydrite est préparé en utilisant 1,00 kg de ciment, 0,60 kg de chaux à réactivité ralentie et 0,20 kg d'anhydrite.

Une suspension d'aluminium à 10 % en poids est préparée en mélangeant 32 g de poudre d'aluminium et 288 g d'eau. La suspension est maintenue sous agitation.

Au départ des 6 kg de boues préparées la veille que l'on place dans un seau de 30 dm³, on ajoute successivement sous agitation à 900 tours par minute 10,71 kg d'eau à 70°C, puis 8,80 kg de sable, puis les 1,80 kg du mélange de ciment, de chaux à réactivité ralentie et d'anhydrite. On maintient sous agitation pendant 2 minutes puis on ajoute les 320 g de la suspension d'aluminium. La suspension est maintenue sous agitation pendant encore 20 secondes puis est versée dans un moule où elle est laissée à reposer à couvert pendant 4 heures, ce qui conduit à la formation d'un gâteau. Celui-ci est placé dans un autoclave à 185°C sous une pression de vapeur de 11 bars où il subit un traitement hydrothermal pendant 6 heures. Des cubes de béton cellulaire sont obtenus en découpant le bloc initial en morceaux de 10 * 10 * 10 cm³ (1 dm³). Ces cubes sont alors séchés à 80 °C pendant plusieurs heures jusqu'à ce qu'ils contiennent une humidité résiduelle de 4 à 8 % en poids, exprimée par rapport au poids de ces mêmes cubes lorsqu'ils sont complètement séchés par un traitement additionnel à 105°C pendant 24 heures (quelques cubes sont sacrifiés pour déterminer le temps de séchage nécessaire pour atteindre cette humidité résiduelle à 80°C).

Six cubes séchés à 80°C sont alors caractérisés. Les résultats qui sont indiqués sont la moyenne des résultats obtenus sur ces six cubes. La densité des cubes est de 0,39 (c'est-à-dire que leur masse volumique est de 0,39 g/cm³) et la résistance à la compression, mesurée perpendiculairement à la direction de croissance des gâteaux, est de 2,6 N/mm².

### Exemple 6.- production de béton cellulaire P2-0,35

Un béton cellulaire est produit selon l'exemple 5 en utilisant les mêmes matières premières et le même protocole mais en changeant les recettes.

Les boues de retour ont été préparées avec 1,94 kg d'eau, 2,00 kg de sable, 1,12 kg de ciment, 0,56 kg de chaux vive à réactivité ralentie et 0,2 kg d'anhydrite.

Le mélange de ciment, de chaux à réactivité ralentie et d'anhydrite est préparé en utilisant 1,12 kg de ciment, 0,68 kg de chaux à réactivité ralentie et 0,2 kg d'anhydrite.

La suspension d'aluminium à 10 % en poids est préparée en mélangeant 44 g de poudre d'aluminium et 396 g d'eau.

Au départ des 6 kg de boues sont ajoutés 11,26 kg d'eau à 70°C, puis 8,00 kg de sable, puis les 2,00 kg du mélange de ciment, de chaux à réactivité ralentie et d'anhydrite, puis les 440 g de la suspension d'aluminium.

La densité des cubes de béton cellulaire est de 0,33 et la résistance à la compression, mesurée perpendiculairement à la direction de croissance des gâteaux, est de 2,1 N/mm².

### Exemple comparatif 1.- chaux vive surcuite « Poro C »

Une chaux vive moulue du commerce, nom de marque 'Poro C', de type 'hard burnt', est utilisée comme référence. Elle est produite au départ de calcaire en roche par surcuisson en four droit. Elle contient 1,0 % en poids de CO₂ résiduel et 0,2 % en poids d'H₂O résiduel. Elle présente des valeurs de t₆₀ de 11,3 min, de T₂ de 30,1°C, de T₅ de 38,2°C et de Tₘ de 71,1°C dans le test de réactivité de norme européenne EN 459-2 : 2010 E.

La chaux Poro C est également caractérisée par le test de réactivité selon la norme EN 459-2 : 2010 E dans lequel l'eau est substituée par de l'eau saturée en sulfate de calcium (2,4 g de gypse dans les 600 cm³ d'eau). A l'issu de ce test, le lait de chaux est filtré à travers un tamis de 200 µm. La matière solide récupérée sur le tamis est séchée à 105°C pendant 1 nuit. On obtient ainsi une masse finale de 6,8 g, ce qui représente 4,5 % en poids d'agglomérats de taille supérieure à 200 µm, par rapport aux 150 g de chaux Poro C mis en œuvre dans ce test.

On effectue alors un test de réversibilité. Pour cela, 200 g de cette chaux vive sont étalés dans une gazette de 30 cm sur 20 cm et sont enfournés directement à 700°C dans un four à moufle. Au bout de 30 min, le traitement thermique est arrêté et la chaux vive est transférée dans un seau métallique fermé où elle est laissée à refroidir pendant 2 h.

La réactivité de la chaux vive résultante n'a sensiblement pas évolué puisque cette dernière présente des valeurs de t₆₀rev de 11,2 min, de T₂rev de 30,5°C, de T₅rev de 39,1°C et de Tₘrev de 71,2°C mesurés selon le test de réactivité à l'eau EN 459-2 : 2010 E.

### Exemple comparatif 2.- chaux vive ralentie à l'eau liquide

La chaux vive moulue de l'exemple 1 a été hydratée par addition d'eau sous forme liquide sous agitation pour atteindre une hydratation de 4,6 %, comme décrit dans le document GB 1,585,483. 3 kg de cette chaux ont ensuite été placés dans le mélangeur Lödige puis traités sous agitation pendant 14 minutes sous un flux d'azote de 40 dm³/min contenant 20 % en volume de CO₂. Cette chaux vive à réactivité ralentie présente des valeurs de t₆₀ de 12,8 min, de T₂ de 22,5°C, de T₅ de 24,5°C et de Tₘ de 63,8°C dans le test de réactivité de norme européenne EN 459-2 : 2010 E. La valeur de Tₘ est particulièrement basse par rapport à la valeur de Tₘ de la chaux mère (75,1°C).

Lors du test de réversibilité, on observe des valeurs de t₆₀rev de 0,9 min, de T₂rev de 70,7 °C, de T₅rev de 75,6°C et de Tₘrev de 76,9°C. La valeur de Tₘrev est particulièrement grande par rapport à la valeur de Tₘ de cette chaux vive à réactivité ralentie.

### Exemple comparatif 3.- production de béton cellulaire P2-0,40

L'exemple 5 est réalisé en substituant la chaux vive à réactivité ralentie de l'exemple 3 par la chaux vive surcuite « PoroC » de l'exemple comparatif 1. La densité des cubes de béton cellulaire est de 0,41 et la résistance à la compression, mesurée perpendiculairement à la direction de croissance des gâteaux, est de 2,8 N/mm².

### Exemple comparatif 4.- production de béton cellulaire P2-0,35

L'exemple 6 est réalisé en substituant la chaux vive à réactivité ralentie de l'exemple 3 par la chaux vive surcuite « PoroC » de l'exemple comparatif 1. La densité des cubes de béton cellulaire est de 0,34 et la résistance à la compression, mesurée perpendiculairement à la direction de croissance des gâteaux, est de 2,2 N/mm².

### Exemple comparatif 5.- chaux vive moulue à cuisson douce t₆₀ = 1,9 min.

La chaux vive moulue utilisée à l'exemple 1 avant traitement selon l'invention (t₆₀ = 1,9 min) est caractérisée avec le test de réactivité selon la norme EN 459-2 :2010 E dans lequel l'eau est substituée par de l'eau saturée en sulfate de calcium (2,4 g de gypse dans les 600 cm³ d'eau). A l'issu de ce test, le lait de chaux obtenu est filtré à travers un tamis de 200 µm. La matière solide récupérée sur le tamis est séchée à 105°C pendant 1 nuit. On obtient ainsi une masse finale de 59 g, ce qui représente 39 % en poids d'agglomérats de taille supérieure à 200 µm, par rapport aux 150 g de chaux vive à réactivité ralentie mis en œuvre dans ce test.

### Exemple comparatif 6.- chaux additivée avec 0,4% de Ca-lignosulfate

12 g de lignosulfonate de calcium ont été ajoutés à 3 kg de chaux vive moulue utilisée à l'exemple 1 avant traitement selon l'invention (t₆₀ = 1,9 min). Le mélange a été homogénéisé dans un mélangeur à pales pendant 5 minutes. La chaux ainsi obtenue présente des valeurs de t₆₀ de 12,0 min, de T₂ de 30,8 °C, de T₅ de 33,5 °C et de Tₘ de 71,3 °C.

Elle est par ailleurs caractérisée avec le test de réactivité selon la norme EN 459-2 : 2010 E dans lequel l'eau est substituée par de l'eau saturée en sulfate de calcium (2,4 g de gypse dans les 600 cm³ d'eau). A l'issu de ce test, le lait de chaux est filtré à travers un tamis de 200 µm. La matière solide récupérée sur le tamis est séchée à 105°C pendant 1 nuit. On obtient ainsi une masse finale de 48 g, ce qui représente 32 % en poids d'agglomérats de taille supérieure à 200 µm, par rapport aux 150 g de chaux mis en œuvre dans ce test.

### Exemple comparatif 7.- chaux additivée avec TEA selon l'art antérieur WO9802391

De la chaux vive moulue présentant initialement des valeurs de t₆₀ de 1,9 min, de T₂ de 61,8°C, de T₅ de 72,2°C et de Tₘ de 74,1°C dans le test de réactivité de norme européenne EN 459-2 : 2010 E, a été traitée avec de la triéthanolamine (TEA), comme décrit dans le document WO9802391, afin de produire une chaux vive additivée selon cet art antérieur, présentant une teneur en TEA de 0,25% en poids par rapport au poids total de la chaux vive.

La réactivité de cette chaux additivée résultante a été mesurée selon la norme EN 459-2 : 2010 E. Les résultats sont repris dans le tableau ci-dessous.

| | t60 (min) | T2 (°C) | T5 (°C) | Tm (°C) |
|---|---|---|---|---|
| Chaux vive moulue initiale | 1,9 | 61,8 | 72,2 | 74,5 |
| Chaux vive additivée (0,25 % TEA) | 3,6 | 39,3 | 67,1 | 71,6 |

Il est bien entendu que la présente invention n'est en aucune façon limitée aux formes de réalisations décrites ci-dessus et que bien des modifications peuvent y être apportées sans sortir du cadre des revendications annexées.

## Revendications

1. Chaux vive à réactivité ralentie présentant une réactivité à l'eau t₆₀ selon le test de réactivité EN 459-2 : 2010 E supérieure ou égale à 5 minutes, **caractérisée en ce que** ladite chaux vive à réactivité ralentie est une chaux vive à cuisson douce qui présente une réactivité à l'eau t₆₀ inférieure ou égale à 18 minutes et une température maximum Tₘ mesurée selon la norme EN 459-2 2010 E supérieure ou égale à 65°C, de préférence supérieure ou égale à 67°C, et plus préférentiellement supérieure ou égale à 69°C et **en ce que**, après traitement thermique à 700°C pendant 30 minutes de 200 g de ladite chaux vive à réactivité ralentie, elle présente une réactivité à l'eau t₆₀rev inférieure ou égale à 1/3 dudit t₆₀ mesuré selon le test de réactivité EN 459-2 : 2010 E et une température maximum Tₘrev mesurée selon la norme EN 459-2 : 2010 E supérieure à Tₘ et inférieure ou égale à Tₘ+5°C, de préférence à Tₘ+3°C, avantageusement à Tₘ+2°C.

2. Chaux vive à réactivité ralentie selon la revendication 1, présentant une valeur de t₆₀ comprise entre 8 et 12 min, et éventuellement une valeur de Ts, température atteinte après 5 min, comprise entre 25 et 50°C, de préférence comprise entre 30 et 45°C, et éventuellement une valeur de T₂, température atteinte après 2 min, comprise entre 21 et 40°C, de préférence comprise entre 25 et 35°C.

3. Chaux vive à réactivité ralentie selon la revendication 1, présentant une valeur de t₆₀ comprise entre 5 et 8 min, et éventuellement une valeur de T₅, température atteinte après 5 min, comprise entre 35 et 65°C, de préférence comprise entre 40 et 60°C, et éventuellement une valeur de T₂,température atteinte après 2 min, comprise entre 25 et 55°C, de préférence comprise entre 35 et 50°C.

4. Chaux vive à réactivité ralentie selon la revendication 1, présentant une valeur de t₆₀ comprise entre 12 et 18 min, et éventuellement une valeur de T₅,température atteinte après 5 min, comprise entre 21 et 40°C, de préférence comprise entre 25 et 30°C, et éventuellement une valeur de T₂, température atteinte après 2 min, comprise entre 21 et 30°C, de préférence comprise entre 21 et 25°C.

5. Chaux vive à réactivité ralentie selon l'une quelconque des revendications précédentes, présentant une surface spécifique mesurée par manométrie d'adsorption d'azote après dégazage sous vide à 190°C pendant au moins 2 heures et calculée selon la méthode BET multi-points telle que décrite dans la norme ISO 9277 : 2010 E supérieure ou égale à 0,8 m²/g, de préférence supérieure ou égale 1 m²/g.

6. Chaux vive à réactivité ralentie selon l'une quelconque des revendications précédentes présentant une teneur en CaO supérieure ou égale à 90 % en poids, préférentiellement supérieure ou égale à 92 % en poids, et de manière encore plus préférentielle supérieure ou égale à 95 % en poids par rapport au poids total de ladite chaux vive à réactivité ralentie.

7. Chaux vive à réactivité ralentie selon l'une quelconque des revendications précédentes, présentant une teneur en S inférieure ou égale à 0,2 % en poids, préférentiellement inférieure ou égale à 0,1 % en poids par rapport au poids total de la chaux vive à réactivité ralentie.

8. Chaux vive à réactivité ralentie selon l'une quelconque des revendications précédentes, présentant une teneur en carbone organique inférieure ou égale à 0,5 % en poids, de préférence inférieure ou égale à 0,2 % en poids et plus préférentiellement inférieure ou égale à 0,1 % en poids, en particulier inférieure ou égale à 0,08 % en poids, plus particulièrement inférieure ou égale à 0,05% en poids par rapport au poids total de la chaux vive à réactivité ralentie.

9. Chaux vive à réactivité ralentie selon l'une quelconque des revendications précédentes présentant, lors du test de réactivité selon la norme EN 459-2 : 2010 E dans lequel l'eau est substituée par de l'eau saturée en sulfate de calcium (2,4 g de gypse dans 600 cm³ d'eau), une quantité d'agglomérats dont la taille est supérieure ou égale à 200 µm, inférieure ou égale à 10 % en poids, de préférence inférieure ou égale à 5 % en poids, par rapport à la quantité de ladite chaux vive à réactivité ralentie mise en œuvre dans ledit test.

10. Composition à base de chaux vive à réactivité ralentie selon l'une quelconque des revendications 1 à 9.

11. Procédé de fabrication d'une chaux vive à réactivité ralentie comprenant les étapes suivantes :
(i) amenée d'une chaux vive présentant une valeur de réactivité à l'eau t₆₀, mesurée selon le test de réactivité décrit dans la norme EN 459-2 : 2010 E comprise entre 1 et 5 min, et de préférence comprise entre 1 et 4 min, à une température prédéterminée supérieure ou égale à 50°C, de préférence supérieure ou égale à 70°C, et inférieure ou égale à 300°C, de préférence inférieure ou égale à 250°C,
(ii) amenée d'un gaz comprenant de la vapeur d'eau à un pourcentage volumique compris entre 1 et 25 % par rapport au volume total dudit gaz et du dioxyde de carbone à un pourcentage volumique compris entre 5 et 40 % par rapport au volume total de gaz, ledit gaz présentant une température prédéterminée supérieure ou égale à 50°C, de préférence supérieure ou égale à 70°C, et inférieure ou égale à 300°C, de préférence inférieure ou égale à 250°C, les températures prédéterminées des étapes (i) et (ii) étant choisies dans les plages indiquées de façon que la vapeur d'eau contenue dans le gaz ne se condense pas à son contact avec la chaux vive durant ledit traitement,
(iii) Traitement de ladite chaux vive par un flux dudit gaz, pendant ou après ladite amenée à ladite température prédéterminée de ladite chaux vive et pendant une période de temps prédéterminée au cours de laquelle la quantité d'eau captée par ladite chaux vive est inférieure ou égale à 0,5 % en poids, de préférence inférieure ou égale à 0,3 % en poids, la quantité de CO₂ captée par ladite chaux vive est inférieure ou égale à 0,8 % en poids, de préférence inférieure ou égale à 0,6 % en poids, et la quantité totale d'eau et de CO₂ captée par ladite chaux vive est comprise entre 0,1 et 1,0 % en poids par rapport au poids de la chaux vive à réactivité ralentie, pour former ladite chaux vive à réactivité ralentie, et
(iv) Refroidissement de ladite chaux vive à réactivité ralentie dans un milieu confiné essentiellement exempt d'eau, de vapeur d'eau et de dioxyde de carbone.

12. Procédé de fabrication selon la revendication 11, dans lequel ladite étape (iii) est effectuée jusqu'à obtention d'une chaux vive à réactivité ralentie présentant une réactivité à l'eau t₆₀ selon le test de réactivité EN 459-2 : 2010 E supérieure ou égale à 5 minutes et inférieure ou égale à 18 minutes.

13. Procédé de fabrication selon la revendication 11 ou 12, dans lequel ladite chaux vive amenée est une chaux vive prélevée d'un four de cuisson à ladite température prédéterminée ou est issue d'un préchauffage à ladite température prédéterminée.

14. Procédé de fabrication selon l'une quelconque des revendications 11 à 13, dans lequel ledit traitement de ladite chaux vive amenée par ledit flux dudit gaz est réalisé sous agitation, par exemple à l'aide d'un mélangeur à poudre, notamment un mélangeur à ruban, à vis, à pales ou soc de charrue, ou bien encore à palettes, ou est réalisé lors du concassage ou lors du broyage de ladite chaux vive, par exemple à l'aide d'un broyeur à marteaux, d'un broyeur à boulets, d'un broyeur pendulaire vertical ou d'un broyeur à meules.

15. Procédé de fabrication selon l'une quelconque des revendications 11 à 13, dans lequel le traitement de la chaux vive est réalisé à l'aide d'un lit fluidisé.

16. Procédé de fabrication selon l'une quelconques des revendications 11 à 14, dans lequel le traitement de ladite chaux vive amenée par ledit flux de gaz est réalisé de manière statique, par exemple par passage dudit gaz au travers d'un lit fixe de chaux vive.

17. Procédé de fabrication selon l'une quelconque des revendications 11 à 16, dans lequel ladite chaux vive amenée est sous forme de particules fines de chaux vive présentant un d₁₀₀ inférieur ou égal à 10 mm, de préférence inférieur ou égal à 5 mm, et de préférence inférieure ou égal à 3 mm.

18. Procédé de fabrication selon l'une quelconque des revendications 11 à 16, dans lequel ladite chaux vive amenée est sous forme de broyat de chaux vives présentant un d₉₅ inférieur ou égal à 200 µm, de préférence inférieur ou égal à 100 µm.

19. Procédé de fabrication selon l'une quelconque des revendications 11 à 13 ou 16 , dans lequel ladite chaux vive est sous forme de cailloux de chaux vive présentant un d₁₀ supérieur ou égal à 5 mm, de préférence supérieur ou égal à 10 mm et de préférence supérieur ou égal à 20 mm et un d₁₀₀ inférieur ou égal à 60 mm, de préférence inférieur ou égal à 50 et de préférence inférieur ou égal à 40 mm.

20. Procédé de fabrication selon l'une quelconque des revendications 11 à 19, dans lequel ledit gaz comprend au moins des gaz de fumées de fours de cuisson des calcaires ou des gaz de combustion d'un combustible tel que par exemple le gaz naturel, le lignite, l'anthracite ou la poudre de coke.

21. Procédé de fabrication selon l'une quelconque des revendications 11 à 20, dans lequel ledit gaz présente une teneur en soufre inférieure ou égale à 0,05 % en volume par rapport au volume total dudit gaz.

22. Procédé de fabrication selon l'une quelconque des revendications 11 à 21, dans lequel ledit gaz est préchauffé à la température prédéterminée, par exemple à l'aide d'un échangeur de chaleur.

23. Procédé de fabrication selon l'une quelconque des revendications 13 à 22, dans lequel ledit préchauffage de la chaux vive est réalisé à l'aide d'une double enveloppe et/ou par mise en contact de ladite chaux vive avec un gaz préchauffé tel que par exemple de l'air ou encore avec ledit gaz de traitement de la chaux vive et/ou encore à l'aide d'un échangeur de chaleur telle qu'une vis de préchauffage, mélangeur à ruban, un mélangeur à vis, un mélangeur à pales ou soc de charrue, ou bien encore un mélangeur à palettes.

24. Utilisation de la chaux vive à réactivité ralentie selon l'une quelconque des revendications 1 à 9, ou issue du procédé selon l'une quelconque des revendications 11 à 23, ou de la composition selon la revendication 10, dans un procédé de fabrication de silicate de calcium hydraté (SCH).

25. Utilisation selon la revendication 24, dans un procédé de fabrication de béton cellulaire ou dans un procédé de fabrication de litières pour animaux.

## Patentansprüche

1. Branntkalk mit verzögerter Reaktivität, der eine Reaktivität gegenüber Wasser t₆₀ nach der Reaktivitätsprüfung EN 459-2:2010 E von größer oder gleich 5 Minuten aufweist, **dadurch gekennzeichnet, dass** der Branntkalk mit verzögerter Reaktivität ein weichgebrannter Branntkalk ist, der eine Reaktivität gegenüber Wasser t₆₀ von weniger oder gleich 18 Minuten und eine Maximaltemperatur Tₘ, nach der Norm EN 459-2:2010 E gemessen, von größer oder gleich 65 °C, vorzugsweise größer oder gleich 67 °C, und besonders bevorzugt größer oder gleich 69 °C aufweist, und dadurch, dass er nach Wärmebehandlung von 200 g des Branntkalks mit verzögerter Reaktivität über 30 Minuten bei 700 °C eine Reaktivität gegenüber Wasser t₆₀rev von weniger oder gleich 1/3 der t₆₀, nach der Reaktivitätsprüfung EN 459-2:2010 E gemessen, und eine Maximaltemperatur Tₘrev, nach der Norm EN 459-2:2010 E gemessen, von größer als Tₘ und kleiner als oder gleich Tₘ+5 °C, vorzugweise Tₘ+3 °C, vorteilhafterweise Tₘ+2 °C aufweist.

2. Branntkalk mit verzögerter Reaktivität nach Anspruch 1, der einen t₆₀-Wert zwischen 8 und 12 Min. aufweist, und gegebenenfalls einen T₅-Wert der nach 5 Min. erreichten Temperatur zwischen 25 und 50 °C, vorzugsweise zwischen 30 und 45 °C, und gegebenenfalls einen T₂-Wert der nach 2 Min. erreichten Temperatur zwischen 21 und 40 °C, vorzugsweise zwischen 25 und 35 °C, aufweist.

3. Branntkalk mit verzögerter Reaktivität nach Anspruch 1, der einen t₆₀-Wert zwischen 5 und 8 Min., und gegebenenfalls einen T₅-Wert der nach 5 Min. erreichten Temperatur zwischen 35 und 65 °C, vorzugsweise zwischen 40 und 60 °C, und gegebenenfalls einen T₂-Wert der nach 2 Min. erreichten Temperatur zwischen 25 und 55 °C, vorzugsweise zwischen 35 und 50 °C, aufweist.

4. Branntkalk mit verzögerter Reaktivität nach Anspruch 1, der einen t₆₀-Wert zwischen 12 und 18 Min., und gegebenenfalls einen T₅-Wert der nach 5 Min. erreichten Temperatur zwischen 21 und 40 °C, vorzugsweise zwischen 25 und 30 °C, und gegebenenfalls einen T₂-Wert der nach 2 Min. erreichten Temperatur zwischen 21 und 30 °C, vorzugsweise zwischen 21 und 25 °C, aufweist.

5. Branntkalk mit verzögerter Reaktivität nach einem der vorstehenden Ansprüche, der eine spezifische Oberfläche, gemessen mittels Stickstoffadsorptionsmanometrie nach Vakuumentgasung bei 190 °C über mindestens 2 Stunden und berechnet nach dem in der Norm ISO 9277:2010 E beschriebenen Mehrpunkt-BET-Verfahren , von größer als oder gleich 0,8 m²/g, vorzugsweise größer als oder gleich 1 m²/g aufweist.

6. Branntkalk mit verzögerter Reaktivität nach einem der vorstehenden Ansprüche, der, auf das Gesamtgewicht des Branntkalks mit verzögerter Reaktivität bezogen, einen CaO-Gehalt von größer als oder gleich 90 Gewichts-%, vorzugsweise größer als oder gleich 92 Gewichts-%, und besonders bevorzugt größer als oder gleich 95 Gewichts-% aufweist.

7. Branntkalk mit verzögerter Reaktivität nach einem der vorstehenden Ansprüche, der, auf das Gesamtgewicht des Branntkalks mit verzögerter Reaktivität bezogen, einen S-Gehalt von kleiner als oder gleich 0,2 Gewichts-%, vorzugsweise kleiner als oder gleich 0,1 Gewichts-% aufweist.

8. Branntkalk mit verzögerter Reaktivität nach einem der vorstehenden Ansprüche, der, auf das Gesamtgewicht des Branntkalks mit verzögerter Reaktivität bezogen, einen Gehalt an organischem Kohlenstoff von kleiner als oder gleich 0,5 Gewichts-%, vorzugsweise kleiner als oder gleich 0,2 Gewichts-%, und besonders bevorzugt kleiner als oder gleich 0,1 Gewichts-%, insbesondere kleiner als oder gleich 0,08 Gewichts-%, ganz besonders kleiner als oder gleich 0,05 Gewichts-% aufweist.

9. Branntkalk mit verzögerter Reaktivität nach einem der vorstehenden Ansprüche, der bei der Reaktivitätsprüfung nach der Norm EN 459-2:2010 E, bei der das Wasser durch mit Calciumsulfat gesättigtes Wasser (2,4 g Gips auf 600 cm³ Wasser) ersetzt wird, auf die Menge des bei der Prüfung eingesetzten Branntkalks mit verzögerter Reaktivität bezogen, eine Menge an Agglomeraten aufweist, deren Größe größer als oder gleich 200 µm ist, kleiner als oder gleich 10 Gewichts-%, vorzugsweise kleiner als oder gleich 5 Gewichts-%.

10. Zusammensetzung auf Basis von Branntkalk mit verzögerter Reaktivität nach einem der Ansprüche 1 bis 9.

11. Verfahren zur Herstellung eines Branntkalks mit verzögerter Reaktivität, das die folgenden Schritte umfasst:
(i) Zuführen eines Branntkalks, der einen Reaktivitätswert gegenüber Wasser t₆₀, nach der in der Norm EN 459-2:2010 E beschriebenen Reaktivitätsprüfung gemessen, zwischen 1 und 5 Min., und vorzugsweise zwischen 1 und 4 Min. aufweist, auf einer vorbestimmten Temperatur von größer als oder gleich 50 °C, vorzugsweise größer als oder gleich 70 °C, und kleiner als oder gleich 300 °C, vorzugsweise kleiner als oder gleich 250 °C,
(ii) Zuführen eines Gases, das, auf das Gesamtvolumen des Gases bezogen, Wasserdampf in einem Volumenprozentsatz zwischen 1 und 25 %, und, auf das Gesamtvolumen des Gases bezogen, Kohlendioxid in einem Volumenprozentsatz zwischen 5 und 40 % umfasst, wobei das Gas eine vorbestimmte Temperatur von größer als oder gleich 50 °C, vorzugsweise größer als oder gleich 70 °C, und kleiner als oder gleich 300 °C, vorzugsweise kleiner als oder gleich 250 °C aufweist, wobei die vorbestimmten Temperaturen aus den Schritten (i) und (ii) in den angegebenen Spannen so gewählt werden, dass sich der im Gas enthaltene Wasserdampf bei seinem Kontakt mit dem Branntkalk während der Behandlung nicht kondensiert,
(iii) Behandeln des Branntkalks mit einem Strom des Gases während oder nach dem Zuführen des Branntkalks auf der vorbestimmten Temperatur und während eines vorbestimmten Zeitraums, in dessen Verlauf die Wassermenge, die vom Branntkalk aufgenommen wird, kleiner als oder gleich 0,5 Gewichts-%, vorzugsweise kleiner als oder gleich 0,3 Gewichts-% ist, die CO₂-Menge, die vom Branntkalk aufgenommen wird, kleiner als oder gleich 0,8 Gewichts-%, vorzugsweise kleiner als oder gleich 0,6 Gewichts-% ist, und die Gesamtmenge an Wasser und CO₂, die vom Branntkalk aufgenommen wird, auf das Gewicht des Branntkalks mit verzögerter Reaktivität bezogen zwischen 0,1 und 1,0 Gewichts-% liegt, um den Branntkalk mit verzögerter Reaktivität zu bilden, und
(iv) Abkühlen des Branntkalks mit verzögerter Reaktivität in einem geschlossenen System, das im Wesentlichen frei von Wasser, Wasserdampf und Kohlendioxid ist.

12. Verfahren zur Herstellung nach Anspruch 11, wobei der Schritt (iii) bis zum Erhalt eines Branntkalks mit verzögerter Reaktivität vorgenommen wird, der eine Reaktivität gegenüber Wasser t₆₀ nach der Reaktivitätsprüfung EN 459-2:2010 E von größer als oder gleich 5 Minuten und kleiner als oder gleich 18 Minuten aufweist.

13. Verfahren zur Herstellung nach Anspruch 11 oder 12, wobei der zugeführte Branntkalk ein Branntkalk ist, der auf der vorbestimmten Temperatur aus einem Brennofen entnommen wird oder aus einer Vorerhitzung auf die vorbestimmte Temperatur stammt.

14. Verfahren zur Herstellung nach einem der Ansprüche 11 bis 13, wobei die Behandlung des zugeführten Branntkalks mit dem Strom des Gases unter Rühren ausgeführt wird, zum Beispiel mit Hilfe eines Pulvermischers, vor allem eines Band-, Schnecken-, Schaufel- oder Pflugschar-, oder auch Flügelmischers, oder beim Zerkleinern oder beim Mahlen des Branntkalks ausgeführt wird, zum Beispiel mit Hilfe einer Hammermühle, einer Kugelmühle, einer Vertikalpendelmühle oder einer Kollermühle.

15. Verfahren zur Herstellung nach einem der Ansprüche 11 bis 13, wobei die Behandlung des Branntkalks mit Hilfe eines Wirbelbetts ausgeführt wird.

16. Verfahren zur Herstellung nach einem der Ansprüche 11 bis 14, wobei die Behandlung des zugeführten Branntkalks mit dem Gasstrom statisch ausgeführt wird, zum Beispiel durch Durchleiten des Gases durch ein Branntkalk-Festbett.

17. Verfahren zur Herstellung nach einem der Ansprüche 11 bis 16, wobei der zugeführte Branntkalk in Form von feinen Branntkalkteilchen vorliegt, die einen d₁₀₀ von kleiner als oder gleich 10 mm, vorzugsweise kleiner als oder gleich 5 mm, und vorzugsweise kleiner als oder gleich 3 mm aufweisen.

18. Verfahren zur Herstellung nach einem der Ansprüche 11 bis 16, wobei der zugeführte Branntkalk in Form von Branntkalk-Mahlgut vorliegt, das einen d₉₅ von kleiner als oder gleich 200 µm, vorzugsweise kleiner als oder gleich 100 µm aufweist.

19. Verfahren zur Herstellung nach einem der Ansprüche 11 bis 13 oder 16, wobei der Branntkalk in Form von Branntkalk-Klümpchen vorliegt, die einen d₁₀ von größer als oder gleich 5 mm, vorzugsweise größer als oder gleich 10 mm, und vorzugsweise größer als oder gleich 20 mm, und einen d₁₀₀ von kleiner als oder gleich 60 mm, vorzugsweise kleiner als oder gleich 50, und vorzugsweise kleiner als oder gleich 40 mm aufweisen.

20. Verfahren zur Herstellung nach einem der Ansprüche 11 bis 19, wobei das Gas mindestens Rauchgase aus Brennöfen der Kalksteine oder Verbrennungsgase eines Brennstoffs, wie zum Beispiel Erdgas, Braunkohle, Anthrazit oder Kokspulver umfasst.

21. Verfahren zur Herstellung nach einem der Ansprüche 11 bis 20, wobei das Gas, auf das Gesamtvolumen des Gases bezogen, einen Schwefelgehalt von kleiner als oder gleich 0,05 Volumenprozent aufweist.

22. Verfahren zur Herstellung nach einem der Ansprüche 11 bis 21, wobei das Gas auf die vorbestimmte Temperatur, zum Beispiel mit Hilfe eines Wärmetauschers, vorerhitzt wird.

23. Verfahren zur Herstellung nach einem der Ansprüche 13 bis 22, wobei das Vorerhitzen des Branntkalks mit Hilfe eines Doppelmantels und/oder durch Inkontaktbringen des Branntkalks mit einem vorerhitzten Gas, wie zum Beispiel Luft, oder auch mit dem Behandlungsgas des Branntkalks und/oder auch mit Hilfe eines Wärmetauschers, wie etwa einer Vorheizschnecke, einem Bandmischer, einem Schneckenmischer, einem Schaufel- oder Pflugscharmischer, oder auch einem Flügelmischer ausgeführt wird.

24. Verwendung des Branntkalks mit verzögerter Reaktivität nach einem der Ansprüche 1 bis 9, oder der aus dem Verfahren nach einem der Ansprüche 11 bis 23 stammt, oder der Zusammensetzung nach Anspruch 10, in einem Verfahren zur Herstellung von Calciumsilikathydrat (CSH).

25. Verwendung nach Anspruch 24 in einem Verfahren zur Herstellung von Porenbeton oder in einem Verfahren zur Herstellung von Tierstreu.

## Claims

1. A delayed reactivity quicklime having a reactivity in water t₆₀ according to the EN 459-2 : 2010 E reactivity test greater than or equal to 5 minutes, **characterised in that** said delayed reactivity quicklime is a soft-burnt quicklime which has a reactivity in water t₆₀ less than or equal to 18 minutes and a maximum temperature Tₘ measured according to the standard EN 459-2: 2010 E greater than or equal to 65°C, preferably greater than or equal to 67°C, and more preferably greater than or equal to 69°C and **in that**, after heat treatment at 700°C for 30 minutes of 200 g of said delayed reactivity quicklime, it has a reactivity to the water t₆₀rev less than or equal to 1/3 of said t₆₀ measured according to the EN 459-2: 2010 E reactivity test and a maximum temperature Tₘrev measured according to standard EN 459-2: 2010 E greater than Tₘ and less than or equal to Tₘ+5°C, preferably Tₘ+3°C, advantageously Tₘ+2°C.

2. The delayed reactivity quicklime according to claim 1, having a t₆₀ value of between 8 and 12 min, and optionally a T₅ value, temperature reached after 5 min, of between 25 and 50°C, preferably of between 30 and 45°C, and optionally a T₂ value, temperature reached after 2 min, of between 21 and 40°C, preferably of between 25 and 35°C.

3. The delayed reactivity quicklime according to claim 1, having a t₆₀ value of between 5 and 8 min, and optionally a T₅ value, temperature reached after 5 min, of between 35 and 65°C, preferably of between 40 and 60°C, and optionally a T₂ value, temperature reached after 2 min, of between 25 and 55°C, preferably of between 35 and 50°C.

4. The delayed reactivity quicklime according to claim 1, having a t₆₀ value of between 12 and 18 min, and optionally a T₅ value, temperature reached after 5 min, of between 21 and 40°C, preferably 25 and 30°C, and optionally a T₂ value, temperature reached after 2 min, of between 21 to 30°C, preferably of between 21 to 25°C.

5. The delayed reactivity quicklime according to any one of the preceding claims, having a specific surface area measured by nitrogen adsorption manometry after degassing under vacuum at 190°C for at least 2 hours and calculated according to the multi-point BET method as described in the standard ISO 9277: 2010 E greater than or equal to 0.8 m²/g, preferably greater than or equal to 1 m²/g.

6. The delayed reactivity quicklime according to any one of the preceding claims having a CaO content greater than or equal to 90 %wt, preferably greater than or equal to 92 %wt, and even more preferably greater than or equal to 95 %wt with respect to the total weight of said delayed reactivity quicklime.

7. The delayed reactivity quicklime according to any one of the preceding claims, having a S content less than or equal to 0.2 %wt, preferably less than or equal to 0.1 %wt with respect to the total weight of the delayed reactivity quicklime.

8. The delayed reactivity quicklime according to any one of the preceding claims, having an organic carbon content less than or equal to 0.5 %wt, preferably less than or equal to 0.2 %wt and more preferably less than or equal to 0.1 %wt, in particular less than or equal to 0.08 %wt, more particularly less than or equal to 0.05 %wt with respect to the total weight of the delayed reactivity quicklime.

9. The delayed reactivity quicklime according to any one of the preceding claims having, in the reactivity test according to the standard EN 459-2 : 2010 E in which the water is substituted by the water saturated with calcium sulphate (2.4 g of gypsum in 600 cm³ of water), a quantity of agglomerates whose size is greater than or equal to 200 µm, less than or equal to 10%wt, preferably less than or equal to 5%wt, with respect to the quantity of said delayed reactivity quicklime used in said test.

10. A composition based on the delayed reactivity quicklime according to any one of claims 1 to 9.

11. A method for manufacturing a delayed reactivity quicklime comprising the following steps:
(i) bringing a quicklime having a water reactivity t₆₀ value, measured according to the reactivity test described in standard EN 459-2: 2010 E comprised between 1 and 5 min, and preferably comprised between 1 and 4 min, to a predetermined temperature greater than or equal to 50°C, preferably greater than or equal to 70°C, and less than or equal to 300°C, preferably less than or equal to 250°C,
(ii) bringing a gas comprising water vapour at a percentage by volume comprised between 1 and 25% with respect to the total volume of said gas and carbon dioxide at a percentage by volume comprised between 5 and 40% with respect to the total volume of gas, said gas having a predetermined temperature greater than or equal to 50°C, preferably greater than or equal to 70°C, and less than or equal to 300°C, preferably less than or equal to 250°C, the predetermined temperatures of steps (i) and (ii) being chosen within the ranges indicated so that the water vapour contained in the gas does not condense on contact with the quicklime during said treatment,
(iii) treating said quicklime by a flow of said gas, during or after said bringing to said predetermined temperature of said quicklime and for a predetermined period of time during which the amount of water captured by said quicklime is less than or equal to 0.5%wt, preferably less than or equal to 0.3%wt, the amount of CO₂ captured by said quicklime is less than or equal to 0.8%wt, preferably less than or equal to 0.6%wt, and the total amount of water and CO₂ captured by said quicklime is comprised between 0.1 and 1.0%wt based on the weight of the delayed reactivity quicklime, to form said delayed reactivity quicklime, and
(iv) cooling said delayed reactivity quicklime in a confined medium essentially free of water, water vapor and carbon dioxide.

12. The method for manufacturing according to claim 11, wherein said step (iii) is carried out until a delayed reactivity quicklime is obtained, having a reactivity in water t₆₀ according to the EN 459-2: 2010 E reactivity test greater than or equal to 5 minutes and less than or equal to 18 minutes.

13. The method for manufacturing according to claim 11 or 12, wherein said supplied quicklime is a quicklime taken from a firing kiln at said predetermined temperature or is the result of preheating to said predetermined temperature.

14. The method for manufacturing according to any one of claims 11 to 13, wherein said treatment of said quicklime supplied by said flow of said gas is carried out under agitation, for example with the aid of a powder mixer, in particular a ribbon, screw, paddle or ploughshare, or even bladed mixer, or is produced during the crushing or grinding of said quicklime, e.g. by means of a hammer mill, ball mill, vertical pendulum mill or grinding wheel mill.

15. The method for manufacturing according to any one of claims 11 to 13, wherein the treatment of quicklime is carried out using a fluidised bed.

16. The method for manufacturing according to any one of claims 11 to 14, wherein the treatment of said quicklime brought by said gas flow is carried out in a static manner, for example by passing said gas through a fixed bed of quicklime.

17. The method for manufacturing according to any one of claims 11 to 16, wherein said supplied quicklime is in the form of fine quicklime particles having a d₁₀₀ of less than or equal to 10 mm, preferably less than or equal to 5 mm, and preferably less than or equal to 3 mm.

18. The method for manufacturing according to any one of claims 11 to 16, wherein said supplied quicklime is in the form of a ground quicklime having a d₉₅ of less than or equal to 200 µm, preferably less than or equal to 100 µm.

19. The method for manufacturing according to any one of claims 11 to 13 or 16, wherein said quicklime is in the form of quicklime pebbles having a d₁₀ greater than or equal to 5 mm, preferably greater than or equal to 10 mm and preferably greater than or equal to 20 mm and a d₁₀₀ less than or equal to 60 mm, preferably less than or equal to 50 and preferably less than or equal to 40 mm.

20. The method for manufacturing according to any one of claims 11 to 19, wherein said gas comprises at least flue gases from firing kilns of limestone or combustion gases of a fuel such as for example the natural gas, lignite, anthracite or coke powder.

21. The method for manufacturing according to any one of claims 11 to 20, wherein said gas has a sulphur content of less than or equal to 0.05% by volume with respect to the total volume of said gas.

22. The method for manufacturing according to any one of claims 11 to 21, wherein said gas is preheated to the predetermined temperature, for example by means of a heat exchanger.

23. The method for manufacturing according to any one of claims 13 to 22, wherein said preheating of quicklime is carried out by means of a double jacket and/or by bringing said quicklime into contact with a preheated gas such as, for example, air or with said treatment gas of the quicklime and/or by means of a heat exchanger such as a preheating screw, a ribbon mixer, a screw mixer, a paddle or ploughshare mixer, or a bladed mixer.

24. Use of the delayed reactivity quicklime according to any one of claims 1 to 9, or resulted from the method according to any one of claims 11 to 23, or of the composition according to claim 10, in a method for the manufacture of calcium silicate hydrate (CSH).

25. The use according to claim 24, in a method for the manufacture of aerated concrete or in a method for the manufacture of animal litters.
